# EUROPÄISCHE PATENTANMELDUNG

(11) **EP 1 253 341 A2**
(43) Veröffentlichungstag der Anmeldung: **30.10.2002**
(21) Anmeldenummer: 02007394.6
(22) Anmeldetag: 10.04.2002
(51) Int. Cl.: F16D 25/12, F16D 21/06, F16D 48/06

(54) **Kupplungssystem mit einer hydraulisch betätigbaren Mehrfach-Kupplungseinrichtung**

(30) Priorität: 23.04.2001 DE 10119747; 13.07.2001 DE 10134121
(71) Anmelder: ZF Sachs AG, 97424 Schweinfurt (DE)
(72) Erfinder: Kuhstrebe, Jochen, Dipl.-Phys., 97318 Westheim (DE); Busold, Thomas, Dipl.-Ing., 36039 Fulda (DE); John, Thomas, Dipl.-Ing., 97529 Sulzheim (DE); Schneider, Hans Jürgen, Dipl.-Ing., 97440 Werneck-Stettbach (DE); Moseler, Olaf, Dipl.-Ing., 97070 Würzburg (DE)

(57) **Zusammenfassung**

Die Erfindung betrifft ein Kupplungssystem (200), umfassend eine Kupplungseinrichtung (202) insbesondere für die Anordnung in einem Antriebsstrang zwischen einer Antriebseinheit und einem Getriebe sowie umfassend eine Betätigungseinrichtung (208, 304, 214, 216, ECU) zur Betätigung der Kupplungseinrichtung auf hydraulischem Wege. Die Kupplungseinrichtung weist eine Mehrzahl jeweils einer Getriebeeingangswelle zugeordnete Kupplungsanordnungen (204, 206) auf, die über die Betätigungseinrichtung auf hydraulischem Wege unter Vermittlung wenigstens eines jeweiligen hydraulischen Nehmerzylinders der Kupplungseinrichtung betätigbar sind. Die Betätigungseinrichtung weist wenigstens eine Hydraulikmedium-Bereitstelleinrichtung (208, 304, 214, 216) zum Bereitstellen von Hydraulikmedium auf einem einstellbaren, über den wenigstens einen Nehmerzylinder den Betätigungszustand einer jeweiligen Kupplungsanordnung (204 bzw. 206) bestimmenden Druckniveau und eine Drucksensoranordnung (322) zum Erfassen wenigstens des einer der Kupplungsanordnungen zugeordneten Druckniveaus auf. Es werden unter anderem verschiedene Möglichkeiten vorgeschlagen, die eine Ausbildung der Drucksensoranordnung mit nur einem einzigen Drucksensor (322) ermöglichen.

## Beschreibung

Die Erfindung betrifft ein Kupplungssystem, umfassend eine Kupplungseinrichtung insbesondere für die Anordnung in einem Antriebsstrang zwischen einer Antriebseinheit und einem Getriebe sowie umfassend eine Betätigungseinrichtung zur Betätigung der Kupplungseinrichtung auf hydraulischem Wege, wobei die Kupplungseinrichtung eine Mehrzahl jeweils einer Getriebeeingangswelle zugeordnete Kupplungsanordnungen aufweist, die über die Betätigungseinrichtung auf hydraulischem Wege unter Vermittlung wenigstens eines jeweiligen hydraulischen Nehmerzylinders der Kupplungseinrichtung betätigbar sind, wobei die Betätigungseinrichtung wenigstens eine Hydraulikmedium-Bereitstelleinrichtung zum Bereitstellen von Hydraulikmedium auf einem einstellbaren, über den wenigstens einen Nehmerzylinder den Betätigungszustand einer jeweiligen Kupplungsanordnung bestimmenden Druckniveau und eine Drucksensoranordnung zum Erfassen wenigstens des einer der Kupplungsanordnungen zugeordneten Druckniveaus aufweist.

Es wird beispielsweise an ein Kupplungssystem mit einer Kupplungseinrichtung gedacht, die mehrere nasslaufende Kupplungsanordnungen aufweist (beispielsweise zwei nasslaufende Lamellen-Kupplungsanordnungen im Falle einer auch als Doppelkupplung bezeichenbaren Doppel-Kupplungseinrichtung), deren übertragbares Moment über einen hydraulischen Druck (das Druckniveau) eingestellt wird. Für ein feinfühliges Ein- und Auskuppeln muss der Druck kontinuierlich über einen von der Kupplungskonstruktion abhängigen Druckbereich einstellbar sein. Derartige Kupplungsanordnungen sind in der Regel mit einem in die jeweilige Kupplungsanordnung integrierten Nehmerzylinder ausgeführt, der im Betrieb mit der Kupplungsanordnung rotiert. Die Hydraulikmedium-Bereitstelleinrichtung ist in der Regel außerhalb der Kupplungseinrichtung stationär angeordnet. In diesem Fall steht der hydraulische Nehmerzylinder mit der Hydraulikmedium-Bereitstelleinrichtung über eine in der Regel leckagebehaftete Drehdurchführung oder Drehverbindung in Verbindung. Im Falle der leckagebehafteten Drehdurchführung oder Drehverbindung ist das Hydrauliksystem nicht völlig abgeschlossen, so dass ständig Hydraulikmedium nachgefördert werden muss, um einen bestimmten Druck zu halten.

Um einerseits ein feinfühliges Ein- und Auskuppeln einer jeweiligen Kupplungsanordnung zu erreichen und andererseits im Falle einer Leckage im Bedarfsfall einen bestimmten Druck zu halten, erscheint es grundsätzlich zweckmäßig, den den verschiedenen Kupplungsanordnungen zugeordneten Hydrauliksystemabschnitten jeweils einen eigenen Drucksensor zuzuordnen, um das momentan herrschende Druckniveau und damit indirekt den Betätigungszustand der jeweiligen Kupplungsanordnung zu erfassen und gegebenenfalls über die Hydraulikmedium-Bereitstelleinrichtung einem vorgegebenen Sollwert anzunähern. Es erscheint insbesondere zweckmäßig, wenn die Betätigungseinrichtung dafür ausgelegt ist, alle Kupplungsanordnungen in Abhäniggkeit von einer jeweiligen, einen Soll-Betätigungszustand der jeweiligen Kupplungsanordnung repräsentierenden Führungsgröße und einer jeweiligen, einen Ist-Betätigungszustand der jeweiligen Kupplungsanordnung repräsentierenden, gegebenenfalls dem erfassten Druckniveau entsprechenden Ist-Größe (sowie ggf. einer jeweiligen, der jeweiligen Führungsgröße und der jeweiligen Ist-Größe zugeordneten Differenzgröße) zu betätigen. Hierzu könnte die Betätigungseinrichtung für jede Kupplungsanordnung wenigstens einen Regelkreis zur geregelten Betätigung der jeweiligen Kupplungsanordnung aufweisen.

Die vorstehend angesprochene mögliche Ausbildung der Betätigungseinrichtung stellt aus technischer Sicht sicher in mancher Hinsicht das Optimum dar. Aus Kostengesichtspunkten erscheint es aber als nachteilig, für jede Kupplungsanordnung einen eigenen Drucksensor vorzusehen, da hinreichend genaue Drucksensoren vergleichsweise teuer sind. Die Erfindung trachtet, diesbezüglich Abhilfe zu schaffen.

Nach einem ersten Aspekt der Erfindung wird für das eingangs genannte Kupplungssystem vorgeschlagen, dass die Drucksensoranordnung derart ausgebildet und angeordnet ist, dass sie nur ein zugeordnetes Druckniveau erfasst, das den Betätigungszustand genau einer zugeordneten Kupplungsanordnung bestimmt, dass die Betätigungseinrichtung dafür ausgelegt ist, diese eine Kupplungsanordnung in Abhängigkeit von einer einen Soll-Betätigungszustand dieser Kupplungsanordnung repräsentierenden Führungsgröße und einer einen Ist-Betätigungszustand dieser Kupplungsanordnung repräsentierenden, gegebenenfalls dem erfassten Druckniveau entsprechenden Ist-Größe (sowie gegebenenfalls einer der Führungsgröße und der Ist-Größe zugeordneten Differenzgröße) zu betätigen und dass die Betätigungseinrichtung ferner dafür ausgelegt ist, wenigstens eine andere Kupplungsanordnung in Abhängigkeit von einer einen Soll-Betätigungszustand der anderen Kupplungsanordnung repräsentierenden Führungsgröße und wenigstens einer vorgegebenen oder vorgebbaren Beziehung zwischen der Führungsgröße und einer über den wenigstens einen Nehmerzylinder auf die Kupplungsanordnung wirkenden Ausgangsgröße (gegebenenfalls Druckniveau oder abgegebenes Hydraulikmedium-Volumen) der Betätigungseinrichtung zu betätigen.

Diesem Erfindungsvorschlag liegt die Erkenntnis der Erfinder zugrunde, dass entgegen ursprünglich bei diesen beziehungsweise in der Fachwelt herrschenden Vorstellungen eine Rückmeldung des jeweils herrschenden Druckniveaus vermittels eines Drucksensors doch nicht zwingend erforderlich ist, um einen ordnungsgemäßen Fahrbetrieb zu gewährleisten. Um aber für eine bestimmte, beispielsweise wenigstens einem Anfahrgang (erster Gang oder/und Rückwärtsgang) des Getriebes zugeordnete Kupplungsanordnung eine besonders feinfühlige Kupplungsbetätigung zu ermöglichen, ist vorgesehen, dass die Drucksensoranordnung derart ausgebildet und angeordnet ist, dass sie nur das dieser Kupplungsanordnung zugeordnete, den Betätigungszustand dieser zugeordneten Kupplungsanordnung bestimmendes Druckniveau erfasst, und dass die Betätigungseinrichtung dafür ausgelegt ist, diese eine Kupplungsanordnung in Abhängigkeit von der Führungsgröße und der Ist-Größe (sowie gegebenenfalls der Differenzgröße) zu betätigen.

Für wenigstens eine andere Kupplungsanordnung des Kupplungssystems ist vorgesehen, dass die Betätigungseinrichtung dafür ausgelegt ist, diese in Abhängigkeit von der Führungsgröße und der vorgegebenen oder vorgebbaren Beziehung zu betätigen, ohne dass diese Betätigung von einem von der Bereitstelleinrichtung für diese Kupplungsanordnung bereitgestellten, mittels einer Drucksensoranordnung erfassten Druckniveau abhängt. Eine derartige Betätigung der jeweiligen Kupplungsanordnung ist zumindest beim Umschalten zwischen Gängen bei schon fahrendem Fahrzeug feinfühlig und exakt genug, um noch einen hinreichenden Fahrkomfort zu gewährleisten. Vorzugsweise ist die derart unabhängig von einem erfassten Druckniveau betätigte Kupplungsanordnung aber keinem Anfahrgang (nicht dem ersten Gang oder/und nicht dem Rückwärtsgang) zugeordnet, da für derartige Anfahrgänge in der Regel zum Erreichen eines hohen Komforts eine besonders feinfühlige und exakte Kupplungsbetätigung wünschenswert ist.

Für die Betätigung der betreffenden Kupplungsanordnung in Abhängigkeit von der Führungsgröße und der Ist-Größe (sowie gegebenenfalls der Differenzgröße) kann die Betätigungseinrichtung wenigstens einen Regelkreis zur geregelten Betätigung dieser Kupplungsanordnung aufweisen. Für die Betätigung der betreffenden Kupplungsanordnung in Abhängigkeit von der Führungsgröße und der vorgegebenen oder vorgebbaren Beziehung kann die Betätigungseinrichtung wenigstens eine Steuerkette zur gesteuerten Betätigung der betreffenden Kupplungsanordnung aufweisen.

Die verschiedenen Kupplungsanordnungen der Kupplungseinrichtung können der Betätigungseinrichtung permanent im Sinne einer Betätigung in Abhängigkeit von der Führungsgröße und der Ist-Größe (sowie gegebenenfalls der Differenzgröße) beziehungsweise im Sinne einer Betätigung in Abhängigkeit von Führungsgröße und der vorgegebenen oder vorgebbaren Beziehung zugeordnet sein. In diesem Fall ist es - wie schon erwähnt - bevorzugt, dass die in Abhängigkeit von der Führungsgröße und der Ist-Größe (sowie gegebenenfalls der Differenzgröße) betätigbare Kupplungsanordnung wenigstens einem Anfahrgang des Getriebes zugeordnet ist. Es ist aber auch möglich, wechselnde Zuordnungen der Kupplungsanordnungen zu der Betätigungseinrichtung im genannten ersten und zweiten Sinn vorzusehen. Hierzu kann die Betätigungseinrichtung eine der Drucksensoranordnung zugeordnete Umschaltventilanordnung aufweisen, die derart ausgelegt und angeordnet ist, dass unter Vermittlung der Drucksensoranordnung wahlweise für eine ausgewählte von mehreren Kupplungsanordnung das den Betätigungszustand dieser Kupplungsanordnung bestimmende Druckniveau erfassbar ist, und dass diese ausgewählte Kupplungsanordnung der Betätigungseinrichtung als die eine Kupplungsanordnung zuordenbar ist und wenigstens eine nicht-ausgewählte Kupplungsanordnung der Betätigungseinrichtung als andere Kupplungsanordnung zuordenbar ist. Nach diesem Weiterbildungsvorschlag ist es möglich, dass in Abhängigkeit von den momentan herrschenden Umständen eine aus mehreren Kupplungsanordnungen ausgewählt und derart der Betätigungseinrichtung zugeordnet wird, dass diese Kupplungsanordnung in Abhängigkeit von der Führungsgröße und der Ist-Größe (sowie gegebenenfalls der Differenzgröße) betätigbar ist, während die andere oder anderen Kupplungsanordnung(en) in Abhängigkeit von der Führungsgröße und der vorgegebenen oder vorgebbaren Beziehung betätigbar ist/sind, ohne auf ein erfasstes Druckniveau unmittelbar zurückzugreifen. Ändern sich die Umstände, kann dann eine andere Zuordnung der Kupplungsanordnungen zu der Betätigungseinrichtung gewählt werden.

Nach einem zweiten Aspekt wird für das eingangs genannte Kupplungssystem vorgeschlagen, dass der Drucksensoranordnung eine vorzugsweise als Umschaltventilanordnung ausgebildete Auswahlanordnung zugeordnet ist, über die die Drucksensoranordnung wahlweise oder/und betriebssituationsabhängig mit einem jeweiligen Hydrauliksystemabschnitt einer ausgewählten Kupplungsanordnung aus der Mehrzahl von Kupplungsanordnungen in Druckerfassungsverbindung bringbar ist, um das den Betätigungszustand dieser ausgewählten Kupplungsanordnung bestimmende Druckniveau zu erfassen. Durch Vorsehen der Umschaltventilanordnung lassen sich die Druckniveaus aller mit ihrem Hydrauliksystemabschnitt an der Umschaltventilanordnung angeschlossenen Kupplungsanordnungen erfassen, beispielsweise um das jeweilige Druckniveau zu kontrollieren oder/und eine Betätigung der jeweiligen Kupplungsanordnung auf Grundlage des momentan herrschenden Druckniveaus vorzusehen. Insbesondere ist daran gedacht, dass die Betätigungseinrichtung dafür ausgelegt ist, wenigstens eine mittels der auch als Umschaltanordnung bezeichenbaren Auswahlanordnung ausgewählte oder auswählbare Kupplungsanordnung in Abhängigkeit von einer einen Soll-Betätigungszustand dieser Kupplungsanordnung repräsentierenden Führungsgröße und einer einen Ist-Betätigungszustand dieser Kupplungsanordnung repräsentierenden, gegebenenfalls einem erfassten Druckniveau entsprechenden Ist-Größe (sowie gegebenenfalls einer der Führungsgröße und der Ist-Größe zugeordneten Differenzgröße) zu betätigen. Hierzu kann die Betätigungseinrichtung wenigstens einen Regelkreis zur geregelten Betätigung der betreffenden Kupplungsanordnung aufweisen.

Grundsätzlich kann man nach dem Weiterbildungsvorschlag für alle Kupplungsanordnungen eine Betätigung auf Grundlage einer jeweiligen Führungsgröße und einer jeweiligen Ist-Größe (sowie gegebenenfalls einer jeweiligen Differenzgröße) vorsehen, wobei im Falle einer momentan nicht ausgewählten Kupplungsanordnung das zu einem vorangehenden Zeitpunkt erfasste Druckniveau als Ist-Größe berücksichtigt werden könnte. Durch zyklisches Umschalten der Auswahlanordnung, gegebenenfalls der Umschaltventilanordnung, oder durch situationsabhängiges Umschalten der Auswahlanordnung, gegebenenfalls der Umschaltventilanordnung, kann erreicht werden, dass für alle Kupplungsanordnungen beziehungsweise zumindest für eine momentan relevante Kupplungsanordnung die genannte Betätigung in Abhängigkeit von der Führungsgröße und der Ist-Größe (sowie gegebenenfalls der Differenzgröße) gewährleistet ist. Es kann aber auch zweckmäßig sein, dass die Betätigungseinrichtung dafür ausgelegt ist, wenigstens eine mittels der Auswahlanordnung momentan nicht ausgewählte oder nicht auswählbare Kupplungsanordnung in Abhängigkeit von einer einen Soll-Betätigungszustand dieser Kupplungsanordnung repräsentierenden Führungsgröße und wenigstens einer vorgegebenen oder vorgebbaren Beziehung zwischen der Führungsgröße und einer über den wenigstens einen Nehmerzylinder auf die Kupplungsanordnung wirkenden Ausgangsgröße der Betätigungseinrichtung zu betätigen. Hierzu kann die Betätigungseinrichtung wenigstens eine Steuerkette zu gesteuerten Betäti-gung der betreffenden Kupplungsanordnung aufweisen.

Betreffend die vorgegebene oder vorgebbare Beziehung wird vorgeschlagen, dass diese auf Grundlage eines vermittels der Drucksensoranordnung und der Auswahlanordnung erfassten Ist-Druckwerts kalibrierbar ist.

Nach einem dritten Aspekt wird für das eingangs genannte, eine Kupplungseinrichtung mit wenigstens zwei jeweils einer Getriebeeingangswelle zugeordneten Kupplungsanordnungen aufweisende Kupplungssystem vorgeschlagen, dass zwischen die Drucksensoranordnung einerseits und einem einer ersten Kupplungsanordnung zugeordneten ersten Hydrauliksystemabschnitt und einem einer zweiten Kupplungsanordnung zugeordneten zweiten Hydrauliksystemabschnitt andererseits eine Auswahlanordnung geschaltet ist, die in Abhängigkeit von einem Differenzdruck, der einem den Betätigungszustand der ersten Kupplungsanordnung bestimmenden ersten Druckniveau und einem den Betätigungszustand der zweiten Kupplungsanordnung bestimmenden zweiten Druckniveau zugeordnet ist, eine der beiden Kupplungsanordnung für die Erfassung des den Betätigungszustand dieser Kupplungsanordnung bestimmenden Druckniveaus auswählt und der Drucksensoranordnung derart zuordnet, dass mittels der Drucksensoranordnung ein dieses Druckniveau repräsentierender Druck erfassbar ist.

Die erfindungsgemäße Auswahlanordnung ermöglicht eine Zuordnung der Kupplungsanordnungen beziehungsweise deren Hydrauliksystemabschnitte zu der Drucksensoranordnung in Abhängigkeit von einem den Druckniveaus dieser Kupplungsanordnungen zugeordneten Differenzdruck (im einfachsten Fall einfach der tatsächlichen Differenz dieser Druckniveaus), um mittels der Drucksensoranordnung einen Druck zu erfassen, der das den Betätigungszustand der ausgewählten Kupplungsanordnung bestimmende Druckniveau repräsentiert. Beispielsweise kann immer diejenige Kupplungsanordnung ausgewählt und im genannten Sinne der Drucksensoranordnung zugeordnet werden, deren Druckniveau größer als das Druckniveau der anderen Kupplungsanordnung ist. Umgekehrt könnte immer diejenige Kupplungsanordnung ausgewählt und im genannten Sinne der Drucksensoranordnung zugeordnet werden, deren Druckniveau kleiner als das Druckniveau der anderen Kupplungsanordnung ist. Die Zweckmäßigkeit des vorzusehenden Auswahlkriteriums wird vor allem auch davon abhängen, ob es sich bei den Kupplungsanordnungen um Kupplungsanordnungen des NORMALERWEISE-OFFEN-Typs oder NORMALERWEISE-GESCHLOSSEN-Typs handelt. Als besonders bevorzugt wird vorgeschlagen, dass die Auswahlanordnung diejenige von den beiden Kupplungsanordnungen auswählt und im genannten Sinne mit ihrem Hydrauliksystemabschnitt der Drucksensoranordnung zuordnet, die unter Vermittlung des jeweiligen Druckniveaus momentan weiter ausgerückt ist als die andere Kupplungsanordnung. Man kann aber auch vorsehen, dass diejenige Kupplungsanordnung ausgewählt und im genannten Sinne mit ihrem Hydrauliksystemabschnitt der Drucksensoranordnung zugeordnet wird, die unter Vermittlung des jeweiligen Druckniveaus momentan weiter eingerückt ist als die andere Kupplungsanordnung.

Generell wird es zweckmäßig sein, vorzusehen, dass in wenigstens einem kritischen, für ein feinfühliges Ein- und Auskuppeln besonders wichtigen Bereich der Kupplungsbetätigungskennlinie, nämlich etwa in einem Übergangsbereich zwischen ausgerückter Kupplungsanordnung und schleifender Kupplungsanordnung oder/und in einem Übergangsbereich zwischen schleifender Kupplungsanordnung und eingerückter Kupplungsanordnung, das jeweils herrschende Druckniveau mittels der Drucksensoranordnung erfassbar ist, etwa um vermittels der dafür ausgelegten Betätigungseinrichtung diese ausgewählte Kupplungsanordnung in Abhängigkeit von einer einen Soll-Betätigungszustand dieser Kupplungsanordnung repräsentierenden Führungsgröße und einer einen Ist-Betätigungszustand dieser Führungsanordnung repräsentierenden, gegebenenfalls dem erfassten Druckniveau entsprechenden Ist-Größe (sowie gegebenenfalls einer der Führungsgröße und der Ist-Größe zugeordneten Differenzgröße) zu betätigen. Hierzu kann die Betätigungseinrichtung wenigstens einen Regelkreis zur geregelten Betätigung der ausgewählten Kupplungsanordnung aufweisen.

Die Betätigungseinrichtung kann dafür ausgelegt sein, die durch die Auswahlanordnung momentan nicht ausgewählte Kupplungsanordnung in Abhängigkeit von einer einen Soll-Betätigungszustand dieser Kupplungsanordnung repräsentierenden Führungsgröße und wenigstens einer vorgegebenen oder vorgebbaren Beziehung zwischen der Führungsgröße und einer über den wenigstens einen Nehmerzylinder auf die Kupplungsanordnung wirkenden Ausgangsgröße der Betätigungseinrichtung zu betätigen. Hierzu kann die Betätigungseinrichtung wenigstens eine Steuerkette zur gesteuerten Betätigung der nicht-ausgewählten Kupplungsnaordnung aufweisen. Die Beziehung zwischen der Führungsgröße und der über den wenigstens einen Nehmerzylinder auf die Kupplungsanordnung wirkenden Ausgangsgröße der Betätigungseinrichtung kann auf Grundlage eines vermittels der Drucksensoranordnung und der Auswahlanordnung erfassten Ist-Druckwerts kalibrierbar sein.

Nach einer bevorzugten Ausgestaltung der Auswahlanordnung umfasst diese eine unter Vermittlung des Differenzdrucks zumindest zwischen einer Öffnungsstellung und einer Schließstellung oder zumindest zwischen einem ersten Weg und einem zweiten Weg umschaltbare Ventilanordnung. In Kombination hiermit oder unabhängig hiervon kann die Auswahlanordnung vorteilhaft eine Trennelementanordnung aufweisen, die wenigstens ein in einer Hydraulikverbindung zwischen dem ersten und zweiten Hydrauliksystemabschnitt angeordnetes und unter Wirkung des Differenzdrucks längs einer zugeordneten, einen Abschnitt der Hydraulikverbindung bildenden Verschiebestrecke verschiebbares Trennelement umfasst, das den ersten und den zweiten Hydrauliksystemabschnitt voneinander trennt. Die Drucksensoranordnung kann beispielsweise an einem mittleren Abschnitt der Verschiebestrecke angeschlossen sein. Eine andere Möglichkeit ist, dass eine einen ersten Abschnitt der Hydraulikverbindung bildende erste Verschiebestrecke und eine einen zweiten Abschnitt der Hydraulikverbindung bildende zweite Verschiebestrecke vorgesehen ist. Die erste Verschiebestrecke weist wenigstens ein unter der Wirkung des Differenzdrucks entlang derselben verschiebbares erstes Trennelement auf. Die zweite Verschiebestrecke weist wenigstens ein unter der Wirkung der Differenzdrucks entlang derselben verschiebbares zweites Trennelement auf. Die beiden Verschiebestrecken sind in Reihe geschaltet, und die Druckausgleichsanordnung ist zwischen der ersten und der zweiten Veschiebestrecke an die Hydraulikverbindung angeschlossen.

Dem Trennelement kann an einem dem ersten Hydrauliksystemabschnitt näheren ersten Ende der betreffenden Verschiebestrecke ein erster, gegebenenfalls mit dem Trennelement in Dichteingriff bringbarer Anschlag zugeordnet sein. Ferner kann dem Trennelement an einem dem zweiten Hydrauliksystemabschnitt näheren zweiten Ende der betreffenden Verschiebestrecke ein zweiter, gegebenenfalls mit dem Trennelement in Dichteingriff bringbarer Anschlag zugeordnet sein.

Gemäß bevorzugten Ausführungsformen ist das Trennelement als Kolbenelement oder Kugelelement ausgeführt. Im Falle eines Kolbenelements kann dieses mit einer darin integrierten Ventilanordnung ausgeführt sein, die unter Vermittlung des Differenzdrucks zumindest zwischen einer Öffnungsstellung und einer Schließstellung umschaltbar ist. Die in das Kolbenelement integrierte beziehungsweise weiter oben angesprochene Ventilanordnung kann wenigstens ein Rückschlagventil umfassen.

Dem Trennelement kann eine Vorspannfederanordnung zugeordnet sein, die das Trennelement in eine vorgegebene Richtung entlang der Verschiebestrecke vorspannt. Das Trennelement steht aber vorzugsweise hinsichtlich seiner Positionierung entlang der Verschiebestrecke im Wesentlichen alleine unter der Wirkung von Hydraulikdrücken und gegebenenfalls Reibkräften.

Die erwähnte Ausbildung der Auswahlanordnung mit wenigstens einer Verschiebestrecke und wenigstens einem darin verschiebbaren Trennelement wird als besonders vorteilhaft erachtet, insbesondere dahingehend, dass die Verschiebestrecke als Druckausgleichsstrecke dienen kann, die ermöglicht, dass durch Verschieben des Trennelements der von der Drucksensoranordnung erfasste Druck einer Änderung eines zu erfassenden Druckniveaus nachgeführt wird.

Für alle angesprochenen Aspekte der Erfindung ist es bevorzugt, dass die jeweilige Drucksensoranordnung von einem einzigen Drucksensor gebildet ist.

In der Regel wird die Hydraulik-Bereitstelleinrichtung eine Druckmediumversorgung und eine dieser nachgeschaltete Druckeinstellanordnung aufweisen, wobei die Druckeinstellanordnung auf Grundlage von von der Druckmediumversorgung bereitgestelltem, auf einem Versorgungsdruckniveau befindlichen Hydraulikmedium das Hydraulikmedium auf dem einstellbaren, über den wenigstens einen Nehmerzylinder den Betätigungszustand der jeweiligen Kupplungsanordnung bestimmenden Druckniveau bereitstellt. Die Druckmediumversorgung kann eine Hydraulik-Pumpenanordnung und gegebenenfalls eine Hydraulikmedium-Speicheranordnung zum Speichern unter Druck stehenden Hydraulikmediums aufweisen. Ferner kann eine der Druckmediumversorgung zugeordnete Drucksensoranordnung vorgesehen sein, die das Versorgungsdruckniveau erfasst. Es wird speziell daran gedacht, dass die Drucksensoranordnung einen Speicherdruck der Hydraulikmedium-Speicheranordnung oder/und einen Abgabedruck der Hydraulik-Pumpenanordnung erfasst. Auf diese Weise kann beispielsweise der "Füllzustand" der Hydraulikmedium-Speicheranordnung überwacht werden.

Wird für die Erfassung des Versorgungsdruckniveaus eine eigene Drucksensoranordnung vorgesehen, so entstehen hierdurch nicht unbeträchtliche Kosten. Demgegenüber ist eine Ausbildung des Kupplungssystems bevorzugt, die ohne eine eigene Drucksensoranordnung zum Erfassen des Versorgungsdruckniveaus auskommt.

Hierzu kann gemäß einem ersten Vorschlag vorgesehen sein, dass eine Druckermittlungseinrichtung vorgesehen ist, die das Versorgungsdruckniveau indirekt auf Grundlage wenigstens einer der Hydraulik-Pumpenanordnung, insbesondere wenigstens eines Elektromotors derselben, zugeordneten, einen Förder- oder Druckversorgungszustand der Pumpenanordnung kennzeichnenden Kenngröße ermittelt.

Aus der DE 196 47 940 A1 ist es an sich schon bekannt, aus der Stromaufnahme eines Pumpenantriebsmotors einer Hydraulikpumpe oder aus der Drehzahl der Hydraulikpumpe auf den in einem Druckspeicher herrschenden Druck rückzuschließen und den Pumpenantrieb in Abhängigkeit hiervon anzusteuern. In der Praxis hat sich ein derartiger Ansatz aber nicht bewährt, da beispielsweise eine den Speicherdruck als Funktion der Stromaufnahme des Elektromotors angebende Funktion von vielen Parametern, wie der Öltemperatur, der Pumpentemperatur, der Motordrehzahl, Alterung und gegebenenfalls von weiteren Größen abhängt, wobei sich diese Abhängigkeiten überdies über die Betriebs- und Lebensdauer verändern. Deshalb hat man in der Praxis herkömmlich auf einen eigenen, dem Druckspeicher zugeordneten Drucksensor nicht verzichtet (vgl. DE 199 29 431 A1).

Um den aus der DE 196 47 940 A1 an sich bekannten Gedanken für die Praxis tauglich zu machen, wird weiterbildend vorgeschlagen, dass eine der Ermittlung des Versorgungsdruckniveaus zugrundeliegende Beziehung zwischen dem Versorgungsdruckniveau und der wenigstens einen Kenngröße, gegebenenfalls eine entsprechende Kennlinie oder ein entsprechendes Kennfeld, auf Grundlage eines vermittels der Drucksensoranordnung erfassten Ist-Druckwerts kalibrierbar ist. Durch die Kalibrierung können die zu beachtenden Parameter und deren Änderungen berücksichtigt werden, wobei die Kalibrierung vorzugsweise regelmäßig im normalen Betrieb des Kupplungssystems bzw. des das Kupplungssystem aufweisenden Antriebsstrang bzw. Kraftfahrzeugs erfolgt.

Die vorstehend angesprochenen Gedanken sind auch unabhängig von den anderen Aspekten der Erfindung von Interesse. Demgemäß schlägt die Erfindung nach einem weiteren Aspekt ein Kupplungssystem vor, umfassend eine Kupplungseinrichtung insbesondere für die Anordnung in einem Antriebsstrang zwischen einer Antriebseinheit und einem Getriebe sowie umfassend eine Betätigungseinrichtung zur Betätigung der Kupplungseinrichtung auf hydraulischem Wege, wobei die Kupplungseinrichtung wenigstens eine, vorzugsweise eine Mehrzahl jeweils einer Getriebeeingangswelle zugeordnete Kupplungsanordnungen aufweist, die über die Betätigungseinrichtung auf hydraulischem Wege unter Vermittlung wenigstens eines jeweiligen hydraulischen Nehmerzylinders der Kupplungseinrichtung betätigbar sind, wobei die Betätigungseinrichtung wenigstens eine Hydraulikmedium-Bereitstelleinrichtung zum Bereitstellen von Hydraulikmedium auf einem einstellbaren, über den wenigstens einen Nehmerzylinder den Betätigungszustand einer jeweiligen Kupplungsanordnung bestimmenden Druckniveau und eine Drucksensoranordnung zum Erfassen des der Kupplungsanordnung bzw. wenigstens des einer der Kupplungsanordnungen zugeordneten Druckniveaus aufweist, wobei die Hydraulikmedium-Bereitstelleinrichtung eine Druckmediumversorgung und eine dieser nachgeschaltete Druckeinstellanordnung aufweist, wobei die Druckeinstellanordung auf Grundlage von von der Druckmediumversorgung bereitgestelltem, auf einem Versorgungsdruckniveau befindlichen Hydraulikmedium das Hydraulikmedium auf dem einstellbaren, über den wenigstens einen Nehmerzylinder den Betätigungszustand der jeweiligen Kupplungsanordnung bestimmenden Druckniveau bereitstellt, wobei eine Druckermittlungseinrichtung vorgesehen ist, die das Versorgungsdruckniveau indirekt auf Grundlage wenigstens einer der Hydraulik-Pumpenanordnung, insbesondere wenigstens eines Elektromotors derselben, zugeordneten, einen Förder- oder Druckversorgungszustand der Pumpenanordnung kennzeichnenden Kenngröße ermittelt und wobei eine der Ermittlung des Versorgungsdruckniveaus zugrundeliegende Beziehung zwischen dem Versorgungsdruckniveau und der wenigstens einen Kenngröße, gegebenenfalls eine entsprechende Kennlinie oder ein entsprechendes Kennfeld, auf Grundlage eines vermittels der Drucksensoranordnung erfassten Ist-Druckwerts kalibrierbar ist.

Es wird vor allem daran gedacht, dass die Ermittlung des Versorgungsdruckniveaus auf Grundlage eines von dem Elektromotor momentan aufgenommenen elektrischen Stroms oder/und einer momentanen Drehzahl des Elektromotors bzw. einer zugeordneten Hydraulikpumpe der Hydraulik-Pumpenanordnung erfolgt.

Die Druckeinstellanordnung kann in Zuordnung zu der Kupplungsanordnung bzw. den Kupplungsanordnungen eine (jeweilige) Ventilanordnung umfassen, die das Versorgungsdruckniveau in das den Betätigungszustand bestimmende Druckniveau umsetzt, wobei die Ventilanordnung in Zuordnung zu der bzw. einer jeweiligen Kupplungsanordnung vorzugsweise wenigstens ein Proportional-Druckregelventil oder/und wenigstens zwei An/Aus-Ventile umfasst, wobei zum Kalibrieren der Beziehung die Ventilanordnung in einen Zustand bringbar ist, dass der von der Drucksensoranordnung erfasste Ist-Druckwert in definierter Weise vom Versorgungsdruckniveau abhängt. Beispielsweise kann der Ist-Druckwert unmittelbar dem momentanen Versorgungsdruckniveau entsprechen. Vorzugsweise ist die Ventilanordnung in einen Durchlass-Zustand schaltbar, in dem das Versorgungsdruckniveau zur Drucksensoranordnung durchgelassen wird, und zwar gegebenenfalls über die Auswahlanordnung.

Nach einem anderen Vorschlag ist vorgesehen, dass über eine/die vorzugsweise als Umschaltventilanordnung ausgebildete Auswahlanordnung wenigstens ein Drucksensor der Drucksensoranordnung wahlweise oder/und betriebssituationsabhängig mit einem Hydrauliksystemabschnitt, in dem das Versorgungsdruckniveau herrscht, und einem Hydrauliksystemabschnitt, in dem ein den Betätigungszustand einer zugeordneten, gegebenenfalls momentan mittels der Auswahlanordnung ausgewählten Kupplungsanordnung bestimmendes Druckniveau herrscht, in Druckerfassungsverbindung bringbar ist. Dieser Vorschlag ermöglicht ebenfalls, auf eine eigene Drucksensoranordnung zum Erfassen des Versorgungsdruckniveaus zu verzichten und dementsprechende Kostenvorteile zu erzielen. Dieser Vorschlag ist insoweit unabhängig von dem zuvor behandelten Vorschlag, eine Druckermittlungseinrichtung zur indirekten Ermittlung des Versorgungsniveaus vorzusehen. Man kann den zweiten Vorschlag aber auch mit dem ersten Vorschlag insoweit kombinieren, als dass der zweite Vorschlag zweckmäßig die Kalibrierung der der Ermittlung des Versorgungsdruckniveaus zugrundeliegenden Beziehung zwischen dem Versorgungsdruckniveau und der der wenigstens einen Kenngröße ermöglicht.

Betreffend die Kalibrierung dieser Beziehung bzw. der Beziehung zwischen der Führungsgröße und der über den wenigstens einen Nehmerzylinder auf die Kupplungsanordnung wirkenden Ausgangsgröße der Betätigungseinrichtung (es wird speziell an die Kalibrierung einer entsprechenden Steuerventilanordnung gedacht) wird weiterbildend vorgeschlagen, dass eine dem Kupplungssystem zugeordnete Steuereinheit die Kalibrierung im Betrieb periodisch oder/und unter Ausnutzung von im Betrieb auftretenden oder im Betrieb ohne Störung desselben einstellbaren Zuständen der Kupplungsanordnung bzw. Kupplungsanordnungen und gegebenfalls des Getriebes durchführt. Die Erfindung betrifft ferner ein entsprechendes Kalibrierungsverfahren.

Die Erfindung wird im Folgenden anhand von mehreren in den Figuren gezeigten Ausführungsbeispielen näher erläutert.
- Fig. 1: zeigt in einer schematischen, beispielhaften Darstellung eine Grundstruktur eines erfindungsgemäßen Kupplungssystems mit einer nasslaufenden Doppelkupplung.
- Fig. 2: zeigt ein Beispiel, wie ein Kupplungssystem der Fig. 1 entsprechenden Art nach einem herkömmlichen Ansatz ausgeführt sein könnte.
- Fig. 3: zeigt ein erstes Ausführungsbeispiel eines erfindungsgemäßen Kupplungssystems.
- Fig. 4: veranschaulicht schematisch ein zweites Ausführungsbeispiel eines erfindungsgemäßen Kupplungssystems.
- Fig. 5: veranschaulicht schematisch ein drittes Ausführungsbeispiel eines erfindungsgemäßen Kupplungssystems.
- Fig. 6: veranschaulicht in Fig. 6a schematisch ein viertes Ausführungsbeispiel eines erfindungsgemäßen Kupplungssystems und veranschaulicht in den Fig. 6b, 6c, 6d und 6e weitere Ausführungsvarianten des Kupplungssystems.
- Fig. 7: zeigt in Teilfiguren 7a, 7b und 7c ein weiteres Ausführungsbeispiel eines erfindungsgemäßen Kupplungssystems in zwei Ausführungsvarianten.
- Fig. 8: zeigt in Teilfiguren 8a, 8b und 8c ein weiteres Ausführungsbeispiel eines erfindungsgemäßen Kupplungssystems in zwei Ausführungsvarianten.
- Fig. 9: zeigt ein weiteres Ausführungsbeispiel eines erfindungsgemäßen Kupplungssystems.
- Fig. 10: zeigt ein weiteres Ausführungsbeispiel eines erfindungsgemäßen Kupplungssystems.
- Fig. 11: veranschaulicht in den Teilfiguren 11a, 11b, 11c und 11d verschiedene Möglichkeiten, wie mit nur einem Drucksensor sowohl die beiden Betätigungsdrücke einer Doppelkupplung als auch der Druck eines Hydraulikdruckspeichers erfasst werden können.
- Fig. 12: zeigt in einer teilgeschnittenen Darstellung eine in einem Antriebsstrang eines Kraftfahrzeugs zwischen einem Getriebe und einer Antriebseinheit angeordnete Doppelkupplung mit zwei Lamellen-Kupplungsanordnungen, die Bestandteil eines erfindungsgemäßen Kupplungssystems sein könnte.

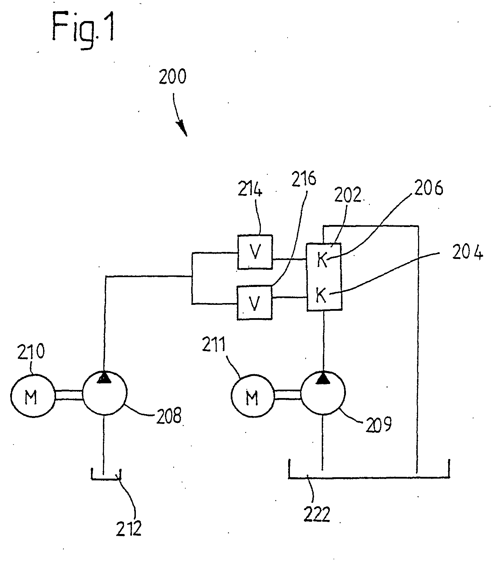

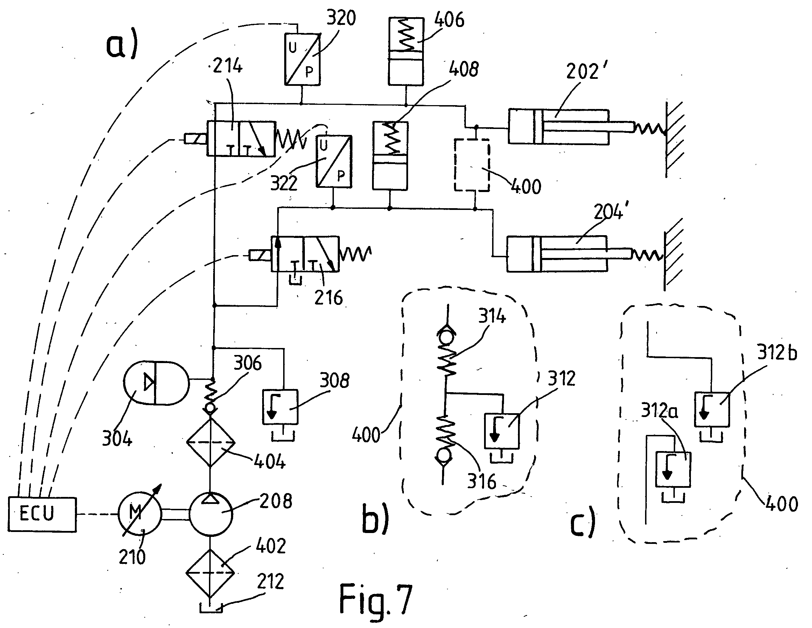

Fig. 1 zeigt schematisch ein Kupplungssystem 200, das eine nasslaufende Doppelkupplung 202 mit einer ersten, radial äußeren Kupplungsanordnung 206 und einer zweiten, radial inneren Kupplungsanordnung 204 aufweist. Bei den Kupplungsanordnungen 204 und 206 handelt es sich um nasslaufende Kupplungsanordnungen, beispielsweise um nasslaufende Lamellen-Kupplungsanordnungen, die auf an sich bekannte Weise jeweils wenigstens ein Lamellenpaket aufweisen, die beim vorliegenden Ausführungsbeispiel radial übereinander angeordnet sind und jeweils durch einen zugeordneten Betätigungskolben eines in die Doppelkupplung integrierten hydraulischen Nehmerzylinders betätigt werden. Beispiele für derartige Doppelkupplungen sind in unten im Zusammenhang mit Fig. 7 identifizierten deutschen Patentanmeldungen der Anmelderin offenbart.

Das Kupplungssystem 200 weist zwei voneinander unabhängige Pumpen, nämlich eine erste Pumpe 208 und eine zweite Pumpe 209 auf, die vorzugsweise jeweils durch einen Elektromotor 210 beziehungsweise 211 angetrieben werden. Die erste, vorzugsweise als hydrostatische Pumpe beziehungsweise Verdrängungsmaschine ausgeführte Pumpe 208 stellt Druckmedium, insbesondere Drucköl, bei einem vergleichsweise hohen Druck bereit, der zur Betätigung der Kupplungsanordnungen 204 und 206 der Doppelkupplung 202 ausreicht. Zur wahlweisen Betätigung der Kupplungsanordnungen sind diese, genauer deren hydraulischen Nehmerzylinder, jeweils über ein zugeordnetes Ventil 214 beziehungsweise 216 an der Pumpe 208 angeschlossen. Die Pumpe saugt Druckmedium aus einem Reservoir 212 an.

Die zweite, vorzugsweise als hydrodynamische Pumpe beziehungsweise Strömungsmaschine ausgeführte Pumpe 209 stellt einen vergleichsweise großen Volumenstrom an Kühlmedium, insbesondere Kühlöl, bereit, das zur Kühlung der Kupplungsanordnungen 204 und 206 dient. Die Pumpe 209 saugt das Kühlmedium, gegebenenfalls Öl, aus einem Reservoir 222 an. Es sei angemerkt, dass es nicht zwingend ist, dass es sich bei dem Reservoir 222 um ein gegenüber dem Reservoir 212 gesondertes Reservoir handelt.

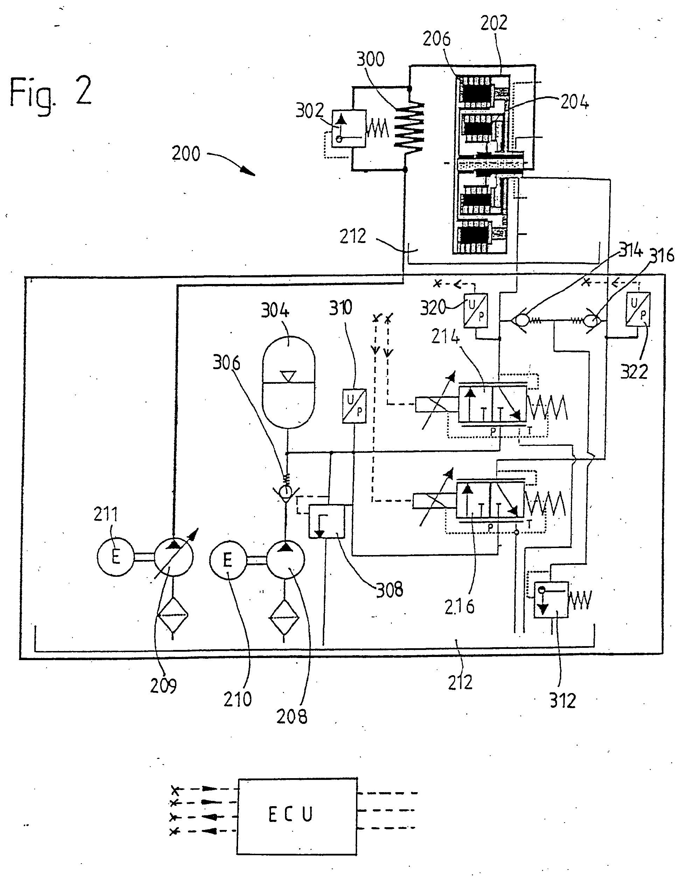

Fig. 2 zeigt, wie das Kupplungssystem der Fig. 1 gemäß einem herkömmlichen Ansatz im Detail ausgeführt sein könnte. Das von der Pumpe 209 bereitgestellte Kühlöl wird der Doppelkupplung 202 über einen Wärmetauscher 300 zugeführt, so dass die Öltemperatur auf einem zur Kühlung der Doppelkupplung hinreichend niedrigem Temperaturniveau gehalten wird. Ein beispielsweise unter Federvorspannung stehendes Bypassventil 302 lässt Kühlöl am Ölkühler 300 vorbei zur Doppelkupplung durch, wenn der Druck etwa aufgrund zu tiefen Temperaturen und dementsprechender Zähflüssigkeit des Öls über eine Schwelle ansteigt.

Im Kupplungsbetätigungs-Druckölkreis ist ein ein unter Druck stehendes Gaspolster aufweisender Druckölspeicher 304 eingebaut, der von der Pumpe 208 über ein Rückschlagventil 306 geladen wird und über die Steuer/Regel-Ventile 214 und 216 an den Betätigungs-Nehmerzylindern der beiden Kupplungsanordnungen 204 und 206 angeschlossen ist. Der Druckölspeicher 304 sorgt für ein gleichmäßiges Druckniveau und ermöglicht, dass als Pumpe 308 eine Pumpe mit relativ kleinem Fördervolumen ausreicht.

Der Druckölkreis zwischen dem Rückschlagventil 306 und den Ventilen 214 und 216 ist durch ein Druckbegrenzungsventil 308 gegen einen übermäßig hohen, gegebenenfalls zu Beschädigungen führenden Druck des Drucköls gesichert. Der durch den Füllzustand des Speichers 304 bestimmte Druck in diesem Druckölkreis wird durch einen Drucksensor 310 erfasst. Ein weiteres Druckbegrenzungsventil 312 sorgt dafür, dass der jenseits den Ventilen 214 und 216 herrschende, auf die hydraulischen Nehmerzylinder der Kupplungsanordnungen wirkende und damit den Betätigungszustand der Kupplungsanordnungen bestimmende Druck einen Maximalwert nicht übersteigt, beispielsweise um ebenfalls Beschädigungen vorzubeugen. Über zwei Rückschlagventile 314 und 316 wird erreicht, dass ein Druckbegrenzungsventil ausreicht, um den Betätigungsdruck von beiden hydraulischen Nehmerzylindern in dieser Hinsicht zu überwachen.

Die jenseits der Steuer/Regel-Ventile 214 und 216 herrschenden Druckniveaus werden von einem jeweiligen Drucksensor 320 beziehungsweise 322 erfasst, die jeweils den erfassten Druck in Form eines elektrischen Signals an eine elektronische Steuereinheit ECU (Electronic Control Unit) rückmelden. Die Ventile 214 und 216 werden von der ECU angesteuert, und zwar auf Grundlage der von den Sensoren 320 und 322 erfassten Drücke und wenigstens einem eine Soll-Kupplungsbetätigung angebenden Führungssignal. Vorzugsweise bilden die Steuereinheit ECU, das Ventil 214 und der Drucksensor 320 einen ersten Regelkreis und bilden die Steuereinheit ECU, das Ventil 216 und der Sensor 322 einen zweiten Regelkreis, um eine geregelte Betätigung für beide Kupplungsanordnungen 204 und 206 vorzusehen.

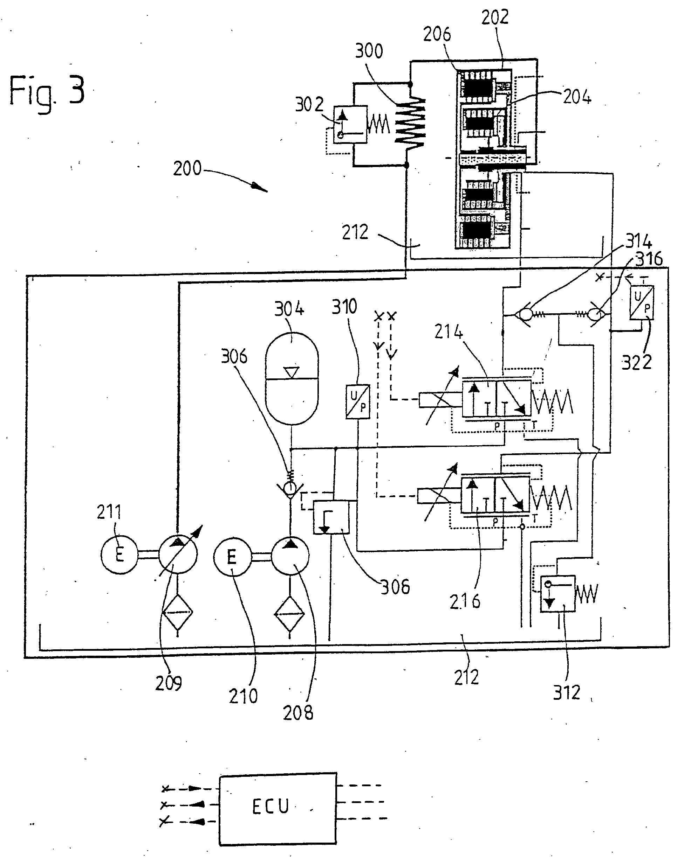

Demgegenüber ist beim in Fig. 3 gezeigten Ausführungsbeispiel der Erfindung vorgesehen, dass kupplungsseitig der Steuer/Regel-Ventile 214 und 216 nur für eines der beiden Ventile ein Drucksensor 322 vorhanden ist, der nur für eine, nämlich die diesem Ventil zugeordnete Kupplungsanordnung das den Betätigungszustand dieser Kupplungsanordnung bestimmende Druckniveau erfasst und an die elektronische Steuereinheit ECU rückmeldet. Für diese Kupplungsanordnung ist eine geregelte Betätigung auf Grundlage des erfassten Drucks und einer vorgegebenen beziehungsweise vorgebbaren Führungsgröße realisiert, während die andere Kupplungsanordnung über das Ventil 214 gesteuert betätigt wird. Es wird also diese über das Ventil 214 betätigte Kupplung bei einem jeweiligen Schaltvorgang stets gesteuert geöffnet und geschlossen, während die über das Ventil 216 betätigte Kupplungsanordnung bei einem Schaltvorgang geregelt geöffnet und geschlossen wird.

Vorzugsweise sind der geregelt betätigten Kupplungsanordnung der erste Getriebegang und der Rückwärts-Getriebegang zugeordnet, da dieser Getriebegänge für Anfahrvorgänge genutzt werden, bei denen es auf eine besonders feinfühlige Kupplungsbetätigung ankommt. Bei den übrigen, regelmäßig nicht für Anfahrvorgänge genutzten Getriebegängen ist das Fahrzeug normalerweise beim Schalten schon in Bewegung und das Einund Auskuppeln erfolgt in einem viel kürzeren Zeitintervall als beim Anfahren, so dass hinsichtlich der "Feinfühligkeit" der Kupplungsbetätigung geringere Anforderungen bestehen und eine gesteuerte Betätigung der zugeordneten Kupplungsanordnung noch für hinreichenden Fahrkomfort sorgt.

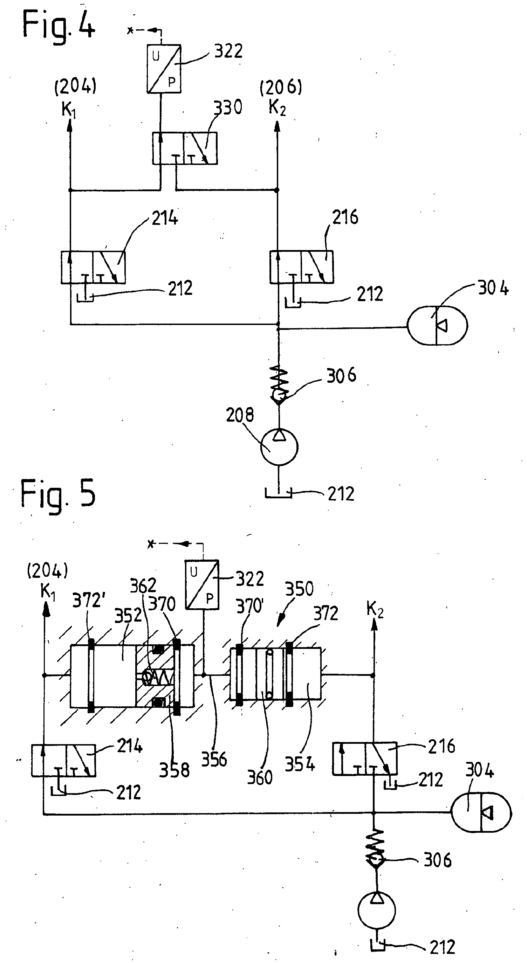

Fig. 4 veranschaulicht eine Möglichkeit, wie mit nur einem Drucksensor 323 beide Druckniveaus jenseits der Ventile 214 und 216, die die Betätigungszustände der Kupplungsanordnungen 204 (K₁) und 206 (K₂) bestimmen, erfasst und für eine geregelte Betätigung der jeweiligen Kupplungsanordnung mittels einer zugeordneten Steuereinheit verwendet werden können. Es ist ein als 3-2-Wegeventil ausgebildetes Umschaltventil 330 vorgesehen, das den Drucksensor 322 wahlweise dem Hydrauliksystemabschnitt der Kupplungsanordnung 204 jenseits dem Ventil 214 oder dem Hydrauliksystemabschnitt der Kupplungsanordnung 206 jenseits dem Ventil 216 zuschaltet. Das Umschaltventil 330 wird von der elektronischen Steuereinheit ECU (vgl. Fig. 3) zwischen einer ersten Stellung, in der der Drucksensor 322 das der Kupplungsanordnung 204 zugeordnete Druckniveau erfasst, und einer zweiten Stellung, in der der Drucksensor 322 das der Kupplungsanordnung 206 bestimmende Druckniveau erfasst, umgeschaltet.

Fig. 5 zeigt eine auf der Grundlage von Differenzdrücken arbeitende Auswahloder Umschaltanordnung, die den Drucksensor 322 gewissermaßeri selbsttätig mit dem zur Kupplungsanordnung 204 führenden Hydrauliksystemabschnitt oder dem zur Kupplungsanordnung 206 führenden Hydrauliksystemabschnitt in Druckerfassungsverbindung bringt, um das den Betätigungszustand der jeweiligen Kupplungsanordnung bestimmende Druckniveau jenseits des Ventils 214 beziehungsweise 216 zu erfassen. Die Umschaltanordnung beziehungsweise Auswahlanordnung 350, die Teil eines Systems sein kann, das ansonsten Fig. 3 entspricht, umfasst einen am Hydrauliksystemabschnitt der Kupplungsanordnung 204 jenseits des Ventils 214 angeschlossenen ersten Zylinderraum 352 und einen am Hydrauliksystemabschnitt der Kupplungsanordnung 206 jenseits dem Ventil 216 angeschlossenen zweiten Zylinderraum 354, die in einem gemeinsamen oder in gesonderten Gehäusen ausgebildet sind. Die Zylinderräume stehen an ihren von den Anschlüssen an den Hydrauliksystemabschnitten entgegengesetzten Enden über eine Hydraulikleitung 356 in Verbindung, an der der Drucksensor 322 leckagefrei angeschlossen ist. In den Zylinderräumen ist jeweils ein Kolben 358 beziehungsweise 360 angeordnet, der über eine Dichtung mit einer Zylinderwand des jeweiligen Zylinderraums in Dichteingriff steht und unter der Wirkung an seinen Stirnflächen angreifenden Hydraulikdrücken längs einer Zylinderraumachse verschiebbar ist. In die Kolben 358 und 360 ist jeweils ein Rückschlagventil 362 integriert, die dann Druckmedium in Richtung zum Drucksensor 322 durchlassen, wenn der Druck im jeweiligen Zylinderraum auf der vom Drucksensor 322 abgelegenen, dem den Betätigungszustand der jeweiligen Kupplungsanordnung bestimmenden Druckniveau ausgesetzten Seite eine Schwelle überschreitet. In umgekehrter Fließrichtung lassen die Rückschlagventile 362 kein Drucköl durch.

Die Funktionsweise der Umschaltanordnung 350 ist wie folgt: Wird die Kupplungsanordnung K₁ (204) mit Druck beaufschlagt, so drückt das Drucköl den Kolben 358 in Richtung zu einer als Anschlag dienenden Dichtung 370. Das dabei aus dem Zylinderraum 352 in die Leitung 356 und in den Zylinderraum 354 verdrängte Öl schiebt den anderen Kolben 360 dabei nach außen, maximal bis dieser an einem Anschlag 372 anliegt. Erreicht der Kolben 358, der in Richtung zum an der Leitung 356 angeschlossenen Ende des Zylinderraums verschoben wird, den von der Dichtung 370 gebildeten Anschlag, so öffnet bei weiter ansteigendem Druckniveau das Rückschlagventil 362, so dass, wenn nicht schon geschehen - der Kolben 360 durch das überströmende Öl gegen den Anschlag 372 verschoben wird.

Es stellt sich stets ein stationärer Zustand ein, in dem der Drucksensor 322 das höhere Druckniveau von den beiden relevanten Druckniveaus, nämlich zum einen das den Betätigungszustand der Kupplungsanordnung 204 bestimmende Druckniveau und zum anderen das den Betätigungszustand der Kupplungsanordnung 206 bestimmende Druckniveau, erfasst. Unter der Voraussetzung, dass beide Kupplungsanordnungen vom NORMALER-WEISE-OFFEN-Typ sind, liegt also am Drucksensor 322 stets das Druckniveau derjenigen Kupplungsanordnung an, die weiter eingerückt als die andere Kupplungsanordnung ist.

Wird das Druckniveau der momentan stärker eingerückten Kupplungsanordnung wieder verringert, so schiebt das Öl den betreffenden Kolben, im hier betrachteten Beispiel den Kolben 358, in entgegengesetzter Richtung, nämlich in Richtung zum an dem Hydrauliksystemabschnitt angeschlossenen Ende des Zylinderraums,-so dass stets auf beiden Seiten des Kolbens' der gleiche Druck herrscht, der das Druckniveau repräsentiert. Der Drucksensor 322 kann also stets das aktuelle Druckniveau der betreffenden Kupplungsanordnung messen. Der Zylinderraum 352 wirkt dabei als Verschiebestrecke, speziell als Druckausgleichsstrecke, die einen Druckausgleich zwischen beiden Stirnseiten des Kolbens durch entsprechende Verschiebung des Kolbens längs der Zylinderraumachse ermöglicht. Dieser Druckausgleich kommt zum Ende, wenn der Kolben 358 den Anschlag 372' erreicht.

Die Zylinderräume sind vorzugsweise derart ausgelegt, dass der Kolben 358 an diesem Anschlag 372' nur dann anschlägt, wenn die andere Kupplungsanordnung, im Beispielsfall die Kupplungsanordnung 206 (K₂), in entsprechender Weise (im Beispielsfall im Einrücksinne) betätigt wird. Das dann jenseits dem Ventil 216 herrschende Druckniveau verschiebt in der erläuterten Weise den Kolben 360 in Richtung zum von der Dichtung 370' gebildeten Anschlag unter entsprechender synchroner Verschiebung des Kolben 358 in Richtung zum Anschlag 372'. Nach Anschlag des Kolbens 360 an der Dichtung 370' öffnet dann bei weiter steigendem Druck das in den Kolben 360 integrierte Rückschlagventil, bis auf beiden Seiten des Kolbens der gleiche Druck herrscht und dementsprechend der Sensor 322 das den Betätigungszustand der Kupplungsanordnung 206 bestimmende Druckniveau erfasst. Die in die Kolben integrierten Rückschlagventile öffnen nur, wenn der betreffende Kolben an seinem dem Sensor 322 näheren Anschlag 370 beziehungsweise 370' anschlägt.

Gegenüber dem in Fig. 5 gezeigten Ausführungsbeispiel der Umschaltanordnung 350 sind diverse Modifikationen denkbar. So könnte man auf die in die Kolben integrierten Rückschlagventile verzichten. Es muss nur dafür gesorgt werden, dass durch entsprechende Auslegung der Zylinderräume hinsichtlich Durchmesser und Verschiebestrecke ein Druckausgleich über einen ausreichend großen Druckbereich möglich ist. Ferner ist es möglich, speziell auf Anschläge und Dichtungen (wie die Anschläge 370, 370', 372 und 372') zu verzichten. Grundsätzlich wäre es auch möglich, die beiden Seiten der Umschaltanordnung (einerseits der Zylinderraum 352 mit dem zugeordneten Kolben 358 und andererseits der Zylinderraum 354 mit dem zugeordneten Kolben 360) verschieden zu gestalten, also gewissermaßen keine Symmetrie vorzusehen. In der Regel wird es aber zweckmäßig sein, die Umschaltanordnung symmetrisch auszulegen.

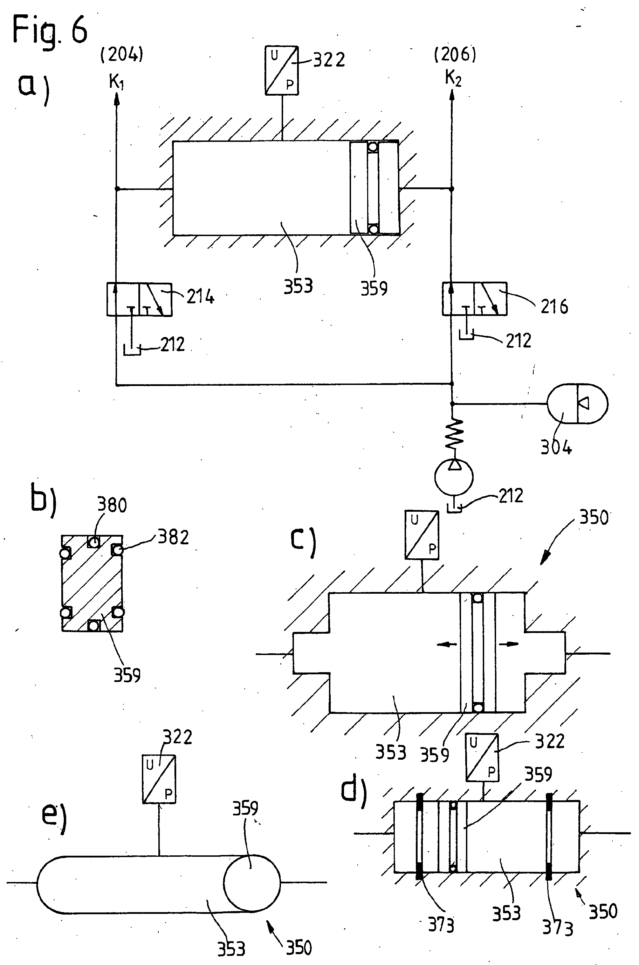

Fig. 6a zeigt eine andere Ausgestaltungsmöglichkeit der Auswahl- oder Umschaltanordnung 350. Es ist nur noch ein einziger Zylinderraum 353 vorgesehen, der einerseits am der Kupplungsanordnung 204 zugeordneten Hydrauliksystemabschnitt jenseits dem Ventil 214 und andererseits am der Kupplungsanordnung 206 zugeordneten Hydrauliksystemabschnitt jenseits dem Ventil 216 angeschlossen ist. Im Zylinderraum 353 ist ein Kolben 359 unter der Wirkung der auf seinen beiden Seiten herrschenden Drücken verschiebbar aufgenommen und steht über eine Dichtung mit der Zylinderinnenwand in Dichteingriff. Der Zylinderraum 353 bildet für den Kolben eine Verschiebestrecke, an der in einem mittleren Bereich der Drucksensor 322 angeschlossen ist. Dem Kolben können in den beiden Endbereichen des Zylinderraums 353 Anschläge entsprechend den Anschlägen 372 und 372' zugeordnet sein, die gegebenenfalls auch Dichtungsfunktion erfüllen. Eine andere, in Fig. 6a gezeigte Möglichkeit ist, dass der Kolben an den den Zylinderraum 353 begrenzenden Gehäuse-Stirnflächen anschlägt. Fig. 6b zeigt verschiedene Möglichkeiten, wie der Kolben mit Dichtungen ausgeführt sein kann, um den der Kupplung 204 zugeordneten Hydrauliksystemabschnitt und den der Kupplung 206 zugeordneten Hydrauliksystemabschnitt voneinander zu trennen und gegeneinander abzudichten, und zwar zumindest in der Anschlagposition des Kolbens 359 an der jeweiligen Gehäuse-Stirnfläche. Eine Möglichkeit ist, dass der Kolben eine mit der Zylinderinnenwand des Zylinderraums in Eingriff stehende Dichtung 380 aufweist. Eine andere Möglichkeit ist, dass der Kolben in den beiden Kolbenstirnseiten jeweils eine Dichtung 382 trägt. Der Kolben kann entweder die Dichtung 380 oder die Dichtung 382 oder beide Dichtungen 380 und 382 aufweisen. Die Dichtungen 382 können anstelle mit der Gehäuse-Stirnflächen auch mit Anschlägen von der in Fig. 5 gezeigten Art (370, 370', 372, 372') zusammenwirken.

Bei der Umschaltanordnung 350 der Fig. 6a wird der Kolben stets zu der Seite hin verschoben, auf der ein geringerer Druck herrscht. Wird also beispielsweise zum Einrücken der Kupplungsanordnung 204 das Druckniveau in dem dieser Kupplungsanordnung zugeordneten Hydrauliksystemabschnitt erhöht, während das der Kupplungsanordnung 206 zugeordnete Druckniveau gleich bleibt -_oder im Falle eine Überschneidungsschaltung - reduziert wird, so bewegt sich der Kolben 359 unter der Wirkung des resultierenden Differenzdrucks in Richtung zu demjenigen Ende des Zylinderraums 353, an dem der der Kupplungsanordnung 206 zugehörige Hydrauliksystemabschnitt angeschlossen ist. Der Kolben kommt in einer Zwischenposition zwischen den den Zylinderraum 353 begrenzenden Gehäuse-Stirnflächen nur dann zum Stillstand, wenn auf beiden Seiten des Kolbens der gleiche Druck herrscht, also die beiden, die Betätigungszustände der beiden Kupplungsanordnungen bestimmenden Druckniveaus also gleich sind. In diesem Fall misst der Drucksensor 322 für beide Kupplungsanordnungen das richtige Druckniveau, unabhängig davon, welche Position der Kolben 359 gerade einnimmt. Ansonsten misst der Drucksensor 322 das Druckniveau derjenigen Kupplungsanordnung, die das höhere Druckniveau hat, da der Kolben 359 unter der Wirkung dieses Druckniveaus an der Anschlussstelle des Drucksensors 322 vorbei in den dem Hydrauliksystemabschnitt der anderen Kupplungsanordnung näheren Zylinderraumbereich verschoben wird, so dass der Drucksensor 22 über den Zylinderraum 353 unmittelbar mit dem das höhere Druckniveau aufweisenden Hydrauliksystemabschnitt in Verbindung steht. Fig. 6a zeigt eine Situation, in der der zur Kupplungsanordnung 204 (K₁) zugehörige Hydrauliksystemabschnitt über den Zylinderraum 253 mit dem Drucksensor 322 in Verbindung steht, so dass dieser Drucksensor das den Betätigungszustand der Kupplungsanordnung 204 bestimmende Druckniveau erfasst.

Fig. 6c zeigt eine Ausführungsvariante der Auswahlanordnung beziehungsweise Umschaltanordnung 350, bei der der Innendurchmesser des Zylinderraums 353 in den Endbereichen kleiner als in einem mittleren Bereich ist, so dass Anschlagschultern für den Anschlag des Kolben 359 gebildet sind. In Fig. 6d ist schematisch die schon angesprochene Variante mit Anschlägen beziehungsweise Dichtungen in der Art der Anschläge/Dichtungen 370, 370', 372, 372' gezeigt; die entsprechenden Dichtungen beziehungsweise Anschläge sind mit 373 bezeichnet.

Fig. 6e zeigt eine weitere Ausführungsvariante der Auswahlanordnung oder Umschaltanordnung 350 mit einem zylindrischen Ölkanal 353 in einer die beiden Hydrauliksystemabschnitte verbindenden Hydraulikverbindung. In dem Ölkanal 353 ist eine Kugel 359 verschiebbar aufgenommen, die an den Kanalenden mit einem Dichtsitz oder einer Dichtfläche in dichtenden Eingriff tritt. Die Kugel 359 wird unter der Wirkung der beidseitig von den Hydrauliksystemabschnitt her auf sie wirkenden Drücke, also unter Wirkung des resultierenden Differenzdrucks, längs dem Kanal 353 verschoben. Die Funktionsweise ist damit im Prinzip genauso wie bei der Ausführungsvariante gemäß Fig. 6a.

Wird eine hydraulische Pumpe, wie die Hydraulikpumpe 208, mit einem Elektromotor, wie der Elektromotor 210, betrieben, so besteht ein Zusammenhang, insbesondere eine Proportionalität, zwischen dem aufgebrachten Druck der Pumpe und dem durch den Motor aufgebrachten Antriebsmoment. Dieses Antriebsmoment ist seinerseits eine Funktion der Stromaufnahme des Elektromotors: p_{system} = f(Mₘₒₜ) = f(i_{Mot}).

Diese Beziehung ist jedoch abhängig von bestimmten Parametern, wie der Öltemperatur, der Pumpentemperatur, der Motordrehzahl, Alterung und gegebenenfalls von weiteren Größen. Sind die Zusammenhänge bekannt, so könnten diese beispielsweise in einem Kennfeld abgelegt werden. Aufgrund von Produktionsstreuung, Alterung und Umgebungseinflüssen ist ein solches Kennfeld von Motor/Pumpe zu Motor/Pumpe unterschiedlich und ändert sich überdies über die Betriebs- und Lebensdauer. Aus diesem Grund hat man in der Praxis auf einen eigenen Drucksensor entsprechend dem Drucksensor 310 in Fig. 2 und 3 zur Bestimmung des Versorgungsdrucks (Speicherdruck des Druckspeichers 304) nicht verzichtet, obwohl dies aus Kostengründen an sich wünschenswert wäre.

Ein Verzicht auf den Drucksensor 310 wird allerdings auch in der Praxis dann möglich, wenn nach einem Aspekt der Erfindung zwar der Versorgungsdruck auf Grundlage der Stromaufnahme des Elektromotors oder/und der Drehzahl des Motors bzw. der Pumpe 208 ermittelt wird, die dieser Ermittlung zugrundeliegende Beziehung aber kalibrierbar ist. Vorzugsweise ist eine Kalibrierung (Anpassung oder Adaption) der ins Kennfeld eingehenden Parameter während des Betriebs des Systems möglich und wird regelmäßig, gegebenenfalls nach einem vorgegebenen oder vorgebbaren Kalibrierungsschema, durchgeführt.

Fig. 7 zeigt ein Ausführungsbeispiel eines entsprechenden Kupplungssystems, bei dem auf den Drucksensor 310 verzichtet ist. Bei diesem Ausführungsbeispiel ist vorgesehen, dass der Versorgungs- oder Speicherdruck des Speichers 304 indirekt über den Strom des Pumpenmotors 210 gemessen wird. Ein entsprechender Strommesser kann in Reihe mit dem Motor geschaltet sein oder in einer dem Motor zugeordneten Steuerelektronik, gegebenenfalls der elektronischen Steuereinheit ECU, angeordnet sein.

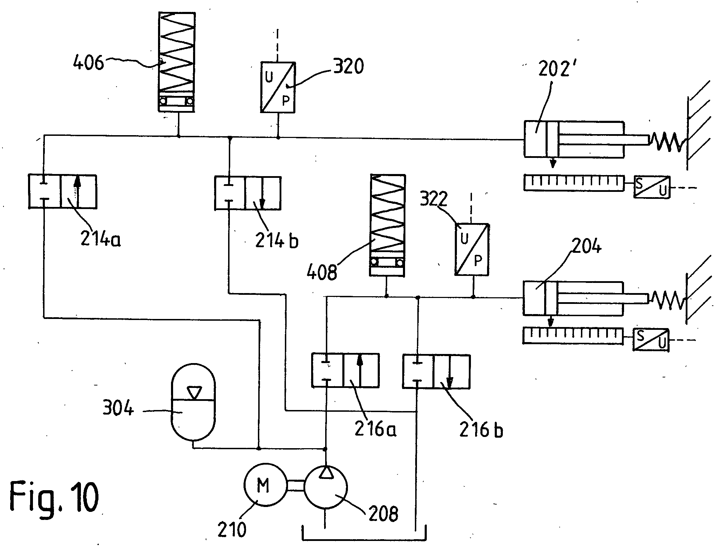

Um die Kennlinie bzw. das Kennfeld, das die Ermittlung des Versorgungsdruckniveaus auf Grundlage des Motorstroms ermöglicht, zyklisch zu adaptieren (zu kalibrieren), wird in gewissen Zeitabständen eine direkte Verbindung zwischen dem Speicher 304 und einem der beiden Drucksensoren 320 und 322 hergestellt, wofür das Steuer/Regel-Ventil 214 oder/und das Steuer/Regel-Ventil 216 entsprechend angesteuert wird. Bei diesen Ventilen 214 und 216 handelt es sich im Beispielsfall um Proportionaldruckregelventile. Alternativ könnten beispielsweise auch jeweils zwei An/Aus-Ventile vorgesehen sein, wie dies in Fig. 10 gezeigt ist. Das betreffende Ventil muss gemäß den hier betrachteten Beispielen zur Kalibrierung der Beziehung so lange und hinreichend weit geöffnet werden, bis der vom betreffenden Drucksensor erfasste Druck dem Versorgungsdruck entspricht oder diesen zumindest zuverlässig wiederspiegelt.

Sind die den Ventilen 214 und 216 zugeordneten Kupplungsanordnungen (in Fig. 7 sind schematisch nur die den Kupplungsanordnungen zugehörigen hydraulischen Betätigungs-Nehmerzylinder 202' und 204' gezeigt), so kann für die Messung des Versorgungsdruckniveaus auf der Getriebeeingangswelle, deren Kupplungsanordnung zur Kalibrierung bzw. Adaption herangezogen wird (sinnvollerweise die Kupplung, die gerade nicht zur Übertragung des Motormoments zu den angetriebenen Rädern des Kraftfahrzeugs benötigt wird) der Gang ausgelegt werden bzw. ein Zustand ohne eingelegtem Gang aufrecht erhalten werden. Zur Kalibrierung/Adaption kann dann der Pumpenmotor 210 mit einem Testsignal oder dergleichen angesteuert werden und es wird parallel hierzu die Stromaufnahme des Motors und mittels dem Drucksensor 320 bzw. 322 der Betätigungsdruck der nicht für den Fahrbetrieb verwendeten Kupplungsanordnung gemessen. Auf Grundlage der gemessenen Daten kann dann das für die Ermittlung des Versorgungsdruckniveaus verwendete Kennfeld angepasst werden.

Zu Fig. 7 ist noch zu ergänzen, dass der Schaltabschnitt 400 zur Absicherung der Betätigungszylinder 202' und 204' dient. Gemäß Fig. 7b bedienen die beiden Rückschlagventile 314 und 316 ein Druckbegrenzungsventil 312, das den Maximaldruck in den hydraulischen Nehmerzylindern begrenzt. Gemäß Fig. 7c ist den beiden hydraulischen Nehmerzylindern jeweils ein eigenes Druckbegrenzungsventil 312a bzw. 312b zugeordnet.

Der Schaltabschnitt 400 ist verzichtbar, wenn der Druckspeicher 304 so ausgelegt ist, dass sein Maximaldruck im gefüllten Zustand nicht über dem maximal zulässigen Druck der hydraulischen Nehmerzylinder 202' und 204' liegt. Es kann dann eine Überdruckabsicherung des Systemdrucks und damit gleichzeitig der auf die hydraulischen Nehmerzylinder wirkenden Betätigungsdrücke alleine auf Grundlage des Druckbegrenzungsventils 308 erreicht werden.

Gemäß Fig. 7 wird das von der Hydraulikpumpe 208 angesaugte Betriebsmedium durch einen Saugfilter 402 vorgefiltert und dann mit Hilfe eines Druckfilters 404 feingefiltert. Je nach Auslegung der einzelnen Bauteile kann auch nur der Filter 402 oder nur der Filter 404 vorgesehen werden oder auf derartige Filter völlig verzichtet werden.

Das Rückschlagventil 306 dient dazu, dass das von der Pumpe 208 in den Speicher 304 geförderte Betriebsmedium nicht wieder zum Betriebsmediumreservoir (gegebenenfalls Ölsumpf) 212 zurückfließen kann.

Für eine bessere Ansteuerbarkeit, gegebenenfalls Regelgüte, der beiden Kupplungsanordnungen kann in den jeweiligen Druckkreislauf ein kleiner Hydraulikspeicher, Pulsationsdämpfer oder dergleichen, eingesetzt werden. Entsprechende Pulsationsdämpfer 406 und 408 sind in Fig. 7a eingezeichnet. Derartige Pulsationsdämpfer oder dergleichen sind insbesondere dann von Vorteil, wenn auf einen Druckspeicher entsprechend dem Druckspeicher 304 verzichtet wird, so dass an den Ventilen 214 und 216 unmittelbar der Abgabedruck der Hydraulikpumpe 208 anliegt.

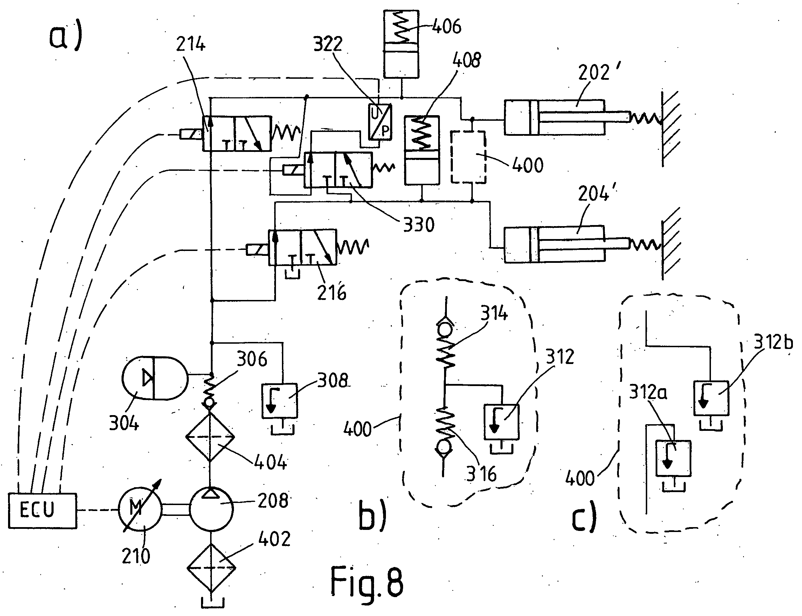

Fig. 8 zeigt ein weiteres Ausführungsbeispiel, das weitgehend Fig. 7 entspricht, allerdings ebenso wie bei Fig. 4 nur einen einzigen Drucksensor 322 aufweist, der über ein Umschaltventil 330 wahlweise dem hydraulischen Nehmerzylinder 202' oder dem hydraulischen Nehmerzylinder 204' zugeschaltet werden kann, um den betreffenden Betätigungshydraulikdruck zu erfassen.

Bei der Verwendung nur eines Drucksensors für beide Kupplüngsanordnungen muss bei einer Überschneidungsschaltung der Doppelkupplung die eine Kupplungsanordnung gesteuert betätigt werden. Dies kann beispielsweise auf Grundlage einer Beziehung zwischen dem Betätigungsdruck und einem Ventilansteuerstrom, etwa der Art p_{Kupplung} = f(i_{Ventil}), erfolgen. Es kann dann für die eine Kupplungsanordnung mit Hilfe des Drucksensors 322 der Betätigungsdruck eingeregelt werden, während für die andere Kupplungsanordnung der Betätigungsdruck über den Ansteuerstrom des zugeordneten Ventils gesteuert eingestellt wird.

Es ist allerdings zu bedenken, dass auch die Charakteristik von für die Ventile 214 und 216 geeigneten Druckregelventilen oder dergleichen Veränderungen und Einflüssen durch verschiedene Parameter unterliegen können, wie dies oben in Bezug auf den Zusammenhang zwischen der Stromaufnahme des Pumpenmotors 210 und dem Versorgungsdruckniveau ausgeführt wurde. Druckregelventile weisen in der Regel eine Proportionalität des eingestellten Stroms zum resultierenden Öldruck auf: P_{Kupplung} = f(i_{Ventil}), wobei die Funktion aber von zahlreichen Parametern (Temperatur, Verschmutzung, Alterung usw.) abhängig sein kann. Um die gesteuerte Betätigung einer der Kupplungsanordnungen gleichwohl für die Praxis tauglich zu machen, kann eine Kalibrierung bzw. Adaption von Kennlinien bzw. Kennfeldern des betreffenden bzw. beider Steuer/Regel-Ventile 214 und 216 vorgesehen sein, die vorzugsweise im Betrieb und gegebenenfalls nach einem vorgegebenen, vorzugsweise regelmäßigen Kalibrierungsschema erfolgt.

Es sei angemerkt, dass dann, wenn mittels des Sensors 322 bzw. mittels den Sensoren 320 und 322 der Betätigungsdruck gemessen und eingeregelt wird, nicht unbedingt Druckregelventile eingesetzt werden müssen. Es könnten auch Wegregelventile oder andere Ventile zum Einsatz kommen. Druckregelventile sind aber insoweit vorteilhaft, als dass sie die Genauigkeit erhöhen. Zudem lässt sich durch Einstellen eines bestimmten elektrischen Ventilstroms bereits direkt ein Druck vorgeben, der ungefähr dem momentanen Solldruck entspricht, so dass die Regelung mehr den Charakter einer Fein-Regelung mit entsprechend geringen Regelzeiten hat.

Wie ausgeführt, ist es vorteilhaft, die Kennlinien/Kennfelder für wenigstens eines der beiden Steuer/Regel-Ventile, gegebenenfalls Druckregelventile 214, 216, von Zeit zu Zeit zu kalibrieren (anzufassen bzw. zu adaptieren). Vorteilhaft ist es insbesondere, diese Kalibrierung/Adaption dann durchzuführen, wenn gerade geschaltet wird, da dann ein größerer Druckbereich durchfahren wird. Dazu misst die Steuereinheit ECU über den betreffenden Drucksensor den auf den betreffenden Betätigungszylinder wirkenden Betätigungsdruck in Zuordnung zum Ansteuerstrom des betreffenden Druckregelventils, und passt dann die Kennlinie bzw. das Kennfeld dieses Ventils an. Diese Kalibrierung wird vorzugsweise für beide Ventile 214 und 216 durchgeführt.

Eine weitere Möglichkeit ist, während eines konstanten Fahrbetriebs den Betätigungsdruck als Funktion des Ventilstroms für jenes der Ventile zu messen, welches derjenigen Kupplungsanordnung zugeordnet ist, für die momentan kein Gang eingelegt ist. Das zugeordnete Ventil kann dabei mit einem Testsignal beaufschlagt werden.

Über die Messung des Drucks und Messung bzw. Bestimmung des Stroms (sowie gegebenenfalls anderer Größen wie z. B. Temperatur) kann das zugehörige Kennfeld durch Anwendung von dem Fachmann geläufigen Methoden bzw. Algorithmen adaptiert werden.

Es sollte noch erwähnt werden, dass man gemäß Fig. 3 auf ein Umschaltventil entsprechend dem Ventil 330 auch verzichten kann. In diesem Fall sollte diejenige Kupplungsanordnung hinsichtlich ihres Betätigungsdrucks sensiert werden, die als Anfahrkupplung dient, da es beim Anfahren auf eine genaue Einstellung, insbesondere Regelung, des Einrückzustands der Kupplungsanordnung ankommt. Eine Kalibrierung der Beziehung zwischen dem Motorstrom des Pumpenmotors 210 und dem herrschenden Versorgungsdruck ist dann in entsprechender Weise auf Grundlage des einen, fest einer Kupplungsanordnung zugeordneten Drucksensors möglich.

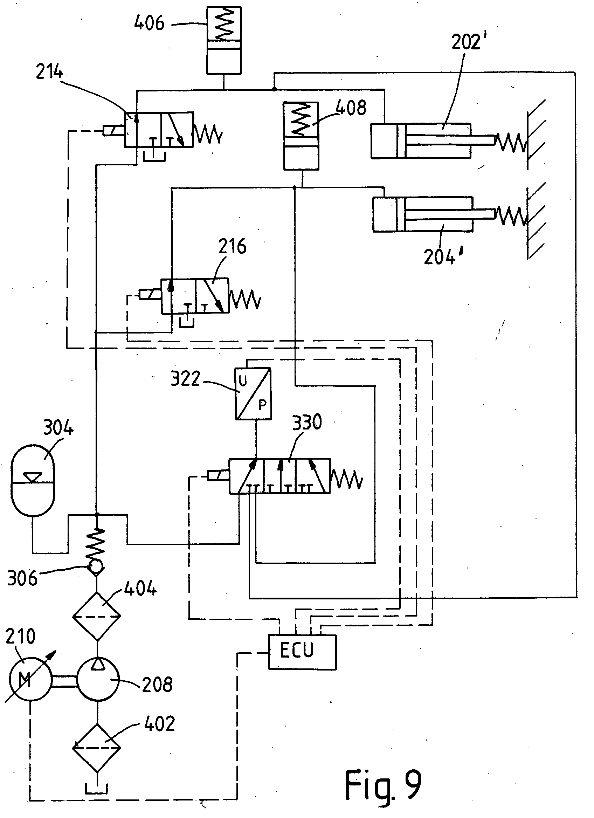

Fig. 9 zeigt ein Ausführungsbeispiel, bei dem anstelle eines 3/2-Wegeventils entsprechend dem Ventil 330 der Fig. 8 bzw. der Fig. 4 ein 4/3-Wegeventil verwendet ist, das ebenfalls mit 330 bezeichnet ist. Dieses Ventil ermöglicht, auf Grundlage nur eines Drucksensors 322 wahlweise sowohl die beiden Betätigungsdrücke der beiden Kupplungsanordnungen als auch den Versorgungsdruck des Druckspeichers 304 zu messen. Es wird wahlweise, vorzugsweise betriebssituationabhängig, jeweils ein Druck der Drücke: auf den Nehmerzylinder 202' wirkender Betätigungsdruck, auf den Nehmerzylinder 204' wirkender Betätigungsdruck und Versorgungsdruck des Druckspeichers 304 ausgewählt und am Drucksensor 322 angelegt. Vorzugsweise ist für die beiden Ventile 214 und 216 sowie für den Pumpenmotor 210 die beschriebene Kalibrierung bzw. Adaption der genannten Kennfelder bzw. Kennlinien auf Grundlage der vom Sensor 322 erfassten Drücke vorgesehen.

Fig. 10 veranschaulicht die Möglichkeit, dass anstelle von Steuer/Regel-Ventilen entsprechenden Ventilen 214 und 216 jeweils zwei An/Aus-Ventile 214a und 214b bzw. 216a und 216b vorgesehen sind, die aufeinander abgestimmt betätigt werden, um einen jeweiligen, auf den hydraulischen Nehmerzylinder 202' bzw. 204' wirkenden Betätigungsdruck einzustellen. Es wird diesbezüglich auf die am 30.01.2001 eingereichte deutsche Patentanmeldung der Anmelderin "Auf hydraulischem Wege betätigbares Kupplungssystem", Aktenzeichen 101 03 843.7 verwiesen.

Zur Kalibrierung der der Bestimmung des Versorgungsdrucks zugrundeliegenden Beziehung muss im Falle einer Anordnung gemäß Fig. 10 das betreffende Zufuhr-Ventil 214a bzw. 216a über einen hinreichend langen Zeitraum offen gehalten werden, wobei gleichzeitig das zugeordnete Abfuhr-Ventil 214b bzw. 216b geschlossen gehalten wird, so dass sich am betreffenden Sensor 320 bzw. 322 stationäre, den Versorgungsdruck repräsentierende Druckverhältnisse einstellen. Es ist hierbei insbesondere auch eine dem Pulsationsdämpfer oder Druckspeicher 406 bzw. 408 zugeordnete "Einschwing"-Zeitkonstante zu berücksichtigen.

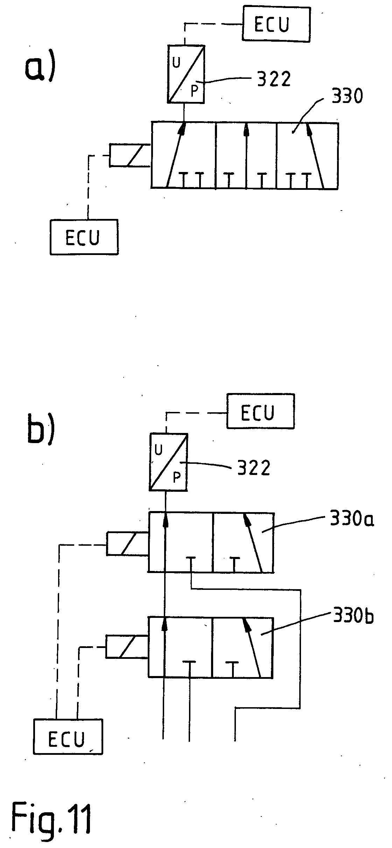

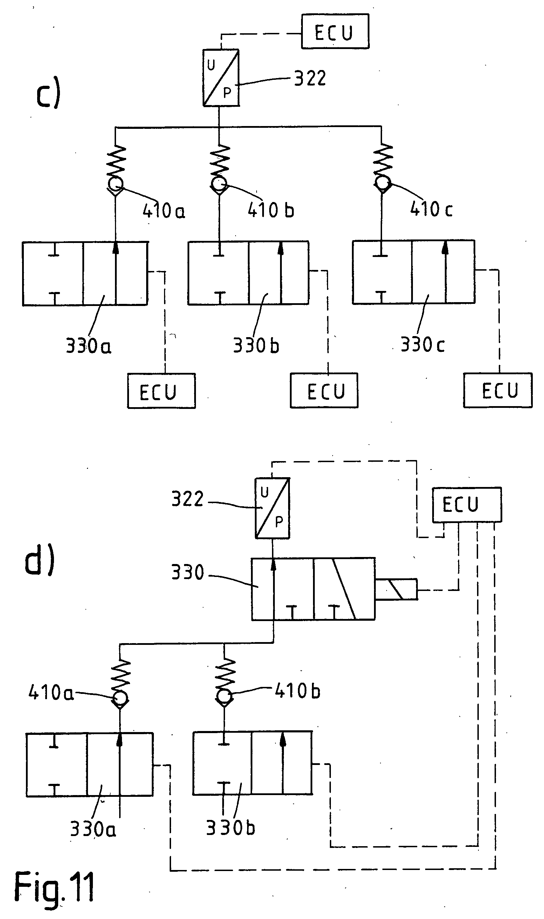

Fig. 11 zeigt zusammenfassend verschiedene Möglichkeiten auf, wie insgesamt drei verschiedene Drücke mittels eines einzigen Drucksensors 322 erfasst werden können. Gemäß Fig. 11a, die insoweit Fig. 9 entspricht, ist ein 4/3-Wegeventil 330 vorgesehen, das den zu erfassenden Druck auswählt und am Drucksensor 322 anlegt. Gemäß Fig. 11b sind zwei 3/2-Wegeventile 330a und 330b vorgesehen, die in Kombination die Funktionalitäten des Ventils 330 der Fig. 11a bereitstellen.

Gemäß Fig. 4c sind drei einfache An/Aus-Ventile 330a, 330b und 330c parallel geschaltet, die zur Auswahl und Anlegung eines jeweiligen Drucks am Drucksensor 322 dienen. Um eine ungewollte Verbindung verschiedener, verschiedene Drücke aufweisender Abschnitte des Hydrauliksystems zu verhindern (es darf jeweils nur ein Ventil den Ventilzustand AN einnehmen), sind Rückschlagventile 410a, 410b und 410c mit einem jeweiligen der Ventile in Reihe geschaltet. So kann beispielsweise bei Ventil-Fehlfunktionen oder Fehlfunktionen der elektronischen Steuereinheit ECU ein unkontrolliertes Schließen beider Kupplungsanordnungen (im Falle einer Doppelkupplung des NORMALERWEISE-OFFEN-Typs) bzw. ein unkontrolliertes Öffnen beider Kupplungsanordnungen (im Falle einer Doppelkupplung des NORMALERWEISE-GESCHLOSSEN-Typs) verhindert werden, welches andernfalls durch eine Zufuhr von Versorgungsdruck durch die Ventile 330a, 330b und 330c zum jeweiligen Betätigungszylinder auftreten könnte.

Fig. 11d zeigt noch die Möglichkeit, zwei An/Aus-Ventile 330a und 330b und ein 3/2-Wegeventil 330c zu kombinieren, um die Funktionalitäten des 4/3-Wegeventils gemäß Fig. 11a bereitzustellen.

Fig. 11 macht anschaulich, dass es grundsätzlich sehr viele Möglichkeiten gibt, wie man mehrere, voneinander unabhängige Drücke auf Grundlage eines einzigen, den betreffenden Hydrauliksystemabschnitten gemeinsam zugeordneten Drucksensors erfassen kann.

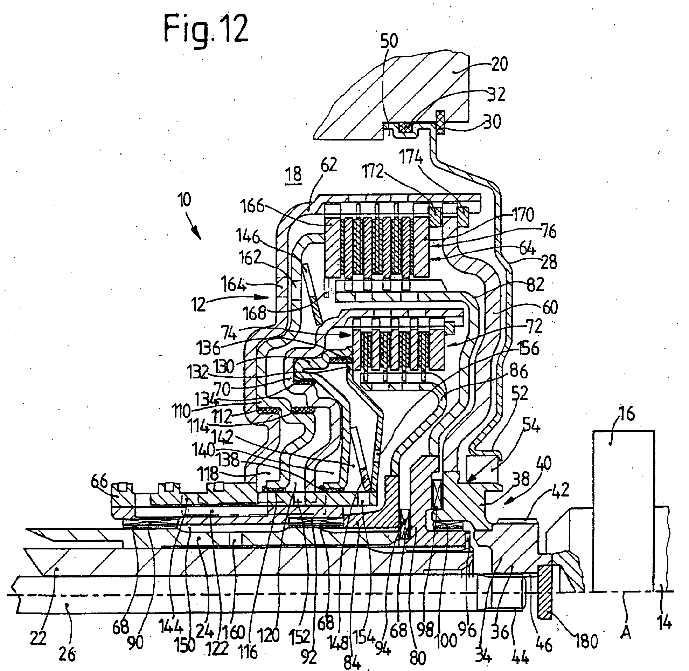

Ein Beispiel einer Mehrfach-Kupplungseinrichtung, die als Teil eines erfindungsgemäßen Kupplungssystems eingesetzt werden kann, wird im Folgeraden anhand der Fig. 12 näher erläutert. Es handelt sich speziell um eine Doppel-Kupplungseinrichtung, kurz Doppelkupplung.

Fig. 12 zeigt eine in einem Antriebsstrang 10 zwischen einer Antriebseinheit und einem Getriebe angeordnete Doppelkupplung 12. Von der Antriebseinheit, beispielsweise eine Brennkraftmaschine, ist in Fig. 12 nur eine Abtriebswelle 14, ggf. Kurbelwelle 14, mit einem zur Ankopplung eines nicht dargestellten Torsionsschwingungsdämpfers dienenden Koppelende 16 dargestellt. Das Getriebe ist in Fig. 12 durch einen eine Getriebegehäuseglocke 18 begrenzenden Getriebegehäuseabschnitt 20 und zwei Getriebeeingangswellen 22 und 24 repräsentiert, die beide als Hohlwellen ausgebildet sind, wobei die Getriebeeingangswelle 22 sich im Wesentlichen koaxial zur Getriebeeingangswelle 24 durch diese hindurch erstreckt. Im Inneren der Getriebeeingangswelle 22 ist eine Pumpenantriebswelle angeordnet, die zum Antrieb einer getriebeseitigen, in Fig. 12 nicht dargestellten Ölpumpe (etwa die Ölpumpe 320) dient, wie noch näher erläutert wird. Ist wenigstens eine elektromotorisch angetriebene Ölpumpe vorgesehen, kann unter Umständen auf die Pumpenantriebswelle verzichtet werden.

Die Doppelkupplung 12 ist in die Getriebegehäuseglocke 18 aufgenommen, wobei der Glockeninnenraum in Richtung zur Antriebseinheit durch einen Deckel 28 verschlossen ist, der in eine Glockengehäuseöffnung eingepresst ist oder/und darin durch einen Sprengring 30 gesichert ist. Weist die Doppelkupplung wie das in Fig. 12 gezeigte Ausführungsbeispiel, nasslaufende Reibungskupplungen, beispielsweise Lamellenkupplungen, auf, so ist es in der Regel angebracht, für einen Dichteingriff zwischen dem Deckel 28 und dem von der Getriebegehäuseglocke 18 gebildeten Kupplungsgehäuse zu sorgen, der beispielsweise mittels eines O-Rings oder eines sonstigen Dichtrings hergestellt sein kann. In Fig. 12 ist ein Dichtring 32 mit zwei Dichtlippen gezeigt.

Als Eingangsseite der Doppelkupplung 12 dient eine Kupplungsnabe 34, die aus noch näher zu erläuternden Gründen aus zwei aneinander festgelegten Ringabschnitten 36, 38 besteht. Die Kupplungsnabe 34 erstreckt sich durch eine zentrale Öffnung des Deckels 28 in Richtung zur Antriebseinheit und ist über eine Außenverzahnung 42 mit dem nicht dargestellten Torsionsschwingungsdämpfer gekoppelt, so dass über diesen eine Momentenübertragungsverbindung zwischen dem Koppelende 16 der Kurbelwelle 14 und der Kupplungsnabe 34 besteht. Möchte man auf einen Torsionsschwingungsdämpfer generell oder an dieser Stelle im Antriebsstrang verzichten, so kann die Kupplungsnabe 34 auch unmittelbar mit dem Koppelende 16 gekoppelt werden. Die Pumpenantriebswelle 26 weist an ihrem vom Getriebe fernen Ende eine Außenverzahnung 44 auf, die in eine Innenverzahnung 46 des Ringabschnitts 36 der Kupplungsnabe 34 eingreift, so dass sich die Pumpenantriebswelle 26 mit der Kupplungsnabe 34 mitdreht und dementsprechend die Ölpumpe antreibt, wenn der Kupplungsnabe 34 eine Drehbewegung erteilt wird, im Regelfall von der Antriebseinheit und in manchen Betriebssituationen eventuell auch vom Getriebe her über die Doppelkupplung (beispielsweise in einer durch das Stichwort "Motorbremse" charakterisierte Betriebssituation).

Der Deckel 28 erstreckt sich radial zwischen einem eine Radialausnehmung 50 der Gehäuseglocke 18 begrenzenden ringförmigen Umfangswandabschnitt der Gehäuseglocke 18 und dem Ringabschnitt 38 der Nabe 34, wobei es vorteilhaft ist, wenn zwischen einem radial inneren Wandbereich 52 des Deckels 28 und der Nabe 34, speziell dem Ringabschnitt 38, eine Dichtungs- oder/und Drehlageranordnung 54 vorgesehen ist, speziell dann, wenn - wie beim gezeigten Ausführungsbeispiel - der Deckel 28 an der Gehäuseglocke 18 festgelegt ist und sich dementsprechend mit der Doppelkupplung 12 nicht mitdreht. Eine Abdichtung zwischen dem Deckel und der Nabe wird insbesondere dann erforderlich sein, wenn es sich, wie beim Ausführungsbeispiel, bei den Kupplungsanordnungen der Doppelkupplung um nasslaufende Kupplungen handelt. Eine hohe Betriebssicherheit auch im Falle von auftretenden Schwingungen und Vibrationen wird erreicht, wenn die Dichtungs- oder/und Drehlageranordnung 54 axial am Deckel 28 oder/und an der Kupplungsnabe 34 gesichert ist, etwa durch einen nach radial innen umgebogenen Endabschnitt des Deckelrands 52, wie in Fig. 12 zu erkennen ist.

An dem Ringabschnitt 38 der Nabe 34 ist ein Trägerblech 60 drehfest angebracht, das zur Drehmomentübertragung zwischen der Nabe 34 und einem Außenlamellenträger 62 einer ersten Lamellen-Kupplungsanordnung 64 dient. Der Außenlamellenträger 62 erstreckt sich in Richtung zum Getriebe und nach radial innen zu einem Ringteil 66, an dem der Außenlamellenträger drehfest angebracht ist und das mittels einer Axial- und Radial-Lageranordnung 68 an den beiden Getriebeeingangswellen 22 und 24 derart gelagert ist, dass sowohl radiale als auch axiale Kräfte an den Getriebeeingangswellen abgestützt werden. Die Axial- und Radial-Lageranordnung 68 ermöglicht eine Relativverdrehung zwischen dem Ringteil 66 einerseits und sowohl der Getriebeeingangswelle 22 als auch der Getriebeeingangswelle 24 andererseits. Auf den Aufbau und die Funktionsweise der Axial- und Radial-Lageranordnung wird später noch näher eingegangen.

Am Ringteil 66 ist axial weiter in Richtung zur Antriebseinheit ein Außenlamellenträger 70 einer zweiten Lamellen-Kupplungsanordnung 72 drehfest angebracht, deren Lamellenpaket 74 vom Lamellenpaket 76 der ersten Lamellen-Kupplungsanordnung ringartig umgeben wird. Die beiden Außenlamellenträger 62 und 70 sind, wie schon angedeutet, durch das Ringteil 66 drehfest miteinander verbunden und stehen gemeinsam über das mittels einer Außenverzahnung mit dem Außenlamellenträger 62 in formschlüssigem Drehmomentübertragungseingriff stehende Trägerblech 60 mit der Kupplungsnabe 34 und damit - über den nicht dargestellten Torsionsschwingungsdämpfer - mit der Kurbelwelle 14 der Antriebseinheit in Momentenübertragungsverbindung. Bezogen auf den normalen Momentenfluss von der Antriebseinheit zum Getriebe dienen die Außenlamellenträger 62 und 70 jeweils als Eingangsseite der Lamellen-Kupplungsanordnung 64 bzw. 72.

Auf der Getriebeeingangswelle 22 ist mittels einer Keilnutenverzahnung oder dergleichen ein Nabenteil 80 eines Innenlamellenträgers 82 der ersten Lamellen-Kupplungsanordnung 64 drehfest angeordnet. In entsprechender Weise ist auf der radial äußeren Getriebeeingangswelle 24 mittels einer Keilnutenverzahnung o. dgl. ein Nabenteil 84 eines Innenlamellenträger 86 der zweiten Lamellen-Kupplungsanordnung 72 drehfest angeordnet. Bezogen auf den Regel-Momentenfluss von der Antriebseinheit in Richtung zum Getriebe dienen die Innenlamellenträger 82 und 86 als Ausgangsseite der ersten bzw. zweiten Lamellen-Kupplungsanordnung 64 bzw. 72.

Es wird noch einmal auf die radiale und axiale Lagerung des Ringteils 66 an den Getriebeeingangswellen 22 und 24 Bezug genommen. Zur radialen Lagerung des Ringteils 66 dienen zwei Radial-Lagerbaugruppen 90 und 92, die zwischen der radial äußeren Getriebeeingangswelle 24 und dem Ringteil 66 wirksam sind. Die axiale Lagerung des Ringsteils 66 erfolgt betreffend einer Abstützung in Richtung zur Antriebseinheit über das Nabenteil 84, ein Axiallager 94, das Nabenteil 80 und einen das Nabenteil 80 an der radial inneren Getriebeeingangswelle 22 axial sichernden Sprengring 96. Das Ringteil 38 der Kupplungsnabe 34 ist wiederum über ein Axiallager 68 und ein Radiallager 100 an dem Nabenteil 80 gelagert. In Richtung zum Getriebe ist das Nabenteil 80 über das Axiallager 94 an einem Endabschnitt der radial äußeren Getriebeeingangswelle 24 axial abgestützt. Das Nabenteil 84 kann unmittelbar an einem Ringanschlag o. dgl. oder einem gesonderten Sprengring o. dgl. in Richtung zum Getriebe an der Getriebeeingangswelle 24 abgestützt sein. Da das Nabenteil 84 und das Ringteil 66 gegeneinander relativ-verdrehbar sind, kann zwischen diesen Komponenten ein Axiallager vorgesehen sein, sofern nicht das Lager 92 sowohl Axiallager- als auch Radiallagerfunktion hat. Vom Letzteren wird in Bezug auf das Ausführungsbeispiel in Fig. 12 ausgegangen.

Große Vorteile ergeben sich daraus, wenn, wie beim gezeigten Ausführungsbeispiel, die sich in radialer Richtung erstreckenden Abschnitte der Außenlamellenträger 62 und 70 auf einer axialen Seite einer sich zu einer Achse A der Doppelkupplung 12 orthogonal erstreckenden Radialebene angeordnet sind und die sich in radialer Richtung erstreckenden Abschnitte der Innenlamellenträger 82 und 86 der beiden Lamellen-Kupplungsanordnungen auf der anderen axialen Seite dieser Radialebene angeordnet sind. Hierdurch wird ein besonders kompakter Aufbau möglich, insbesondere dann, wenn - wie beim gezeigten Ausführungsbeispiel - Lamellenträger einer Sorte (Außenlamellenträger oder Innenlamellenträger, beim Ausführungsbeispiel die Außenlamellenträger) drehfest miteinander verbunden sind und jeweils als Eingangsseite der betreffenden Lamellen-Kupplungsanordnung in Bezug auf den Kraftfluss von der Antriebseinheit zum Getriebe dienen.

In die Doppelkupplung 12 sind Betätigungskolben zur Betätigung der Lamellen-Kupplungsanordnungen integriert, im Falle des gezeigten Ausführungsbeispiels zur Betätigung der Lamellen-Kupplungsanordnungen im Sinne eines Einrückens. Ein der ersten Lamellen-Kupplungsanordnung 64 zugeordneter Betätigungskolben 110 ist axial zwischen dem sich radial erstreckenden Abschnitt des Außenlamellenträgers 62 der ersten Lamellen-Kupplungsanordnung 64 und dem sich radial erstreckenden Abschnitt des Außenlamellenträgers 70 der zweiten Lamellen-Kupplungsanordnung 72 angeordnet und an beiden Außenlamellenträgern sowie am Ringteil 66 mittels Dichtungen 112, 114, 116 axial verschiebbar und eine zwischen dem Außenlamellenträger 62 und dem Betätigungskolben 110 ausgebildete Druckkammer 118 sowie eine zwischen dem Betätigungskolben 110 und dem Außenlamellenträger 70 ausgebildete Fliehkraft-Druckausgleichskammer 120 abdichtend geführt. Die Druckkammer 118 steht über einen in dem Ringteil 66 ausgebildeten Druckmediumkanal 122 mit einem zugeordneten Steuer/Regelventil, etwa dem Ventil 214 oder 216, in Verbindung, wobei der Druckmediumskanal 122 über eine das Ringteil 66 aufnehmende, gegebenenfalls getriebefeste Anschlusshülse an dem Ventil angeschlossen ist. Die Anschlusshülse und das Ringteil 66 bilden eine Drehverbindung. Zum Ringteil 66 ist in diesem Zusammenhang zu erwähnen, dass dieses für eine einfachere Herstellbarkeit insbesondere hinsichtlich des Druckmediumkanals 122 sowie eines weiteren Druckmediumkanals zweiteilig hergestellt ist mit zwei ineinander gesteckten hülsenartigen Ringteilabschnitten, wie in Fig. 12 angedeutet ist.

Ein der zweiten Lamellen-Kupplungsanordnung 72 zugeordneter Betätigungskolben 130 ist axial zwischen dem Außenlamellenträger 70 der zweiten Lamellen-Kupplungsanordnung 72 und einem sich im Wesentlichen radial erstreckenden und an einem vom Getriebe fernen axialen Endbereich des Ringteils 66 drehfest und fluiddicht angebrachten Wandungsteil 132 angeordnet und mittels Dichtungen 134, 136 und 138 am Außenlamellenträger 70, dem Wandungsteil 132 und dem Ringteil 66 axial verschiebbar und eine zwischen dem Außenlamellenträger 70 und dem Betätigungskolben 130 ausgebildete Druckkammer 140 sowie eine zwischen dem Betätigungskolben 130 und dem Wandungsteil 132 ausgebildete Fliehkraft-Druckausgleichskammer 142 abdichtend geführt. Die Druckkammer 140 ist über einen weiteren (schon erwähnten) Druckmediumskanal 144 in entsprechender Weise wie die Druckkammer 118 an einem zugeordneten Steuer/Regelventil, etwa dem Ventil 214 oder 216, angeschlossen. Mittels der genannten Ventile, die andererseits an einer Hydraulikmediumversorgung, etwa die Pumpe 208 mit dem Speicher 304, angeschlossen sind, kann an den beiden Druckkammern 118 und 140 wahlweise (gegebenenfalls auch gleichzeitig) ein Betätigungsdruck angelegt werden, um die erste Lamellen-Kupplungsanordnung 64 oder/und die zweite Lamellen-Kupplungsanordnung 72 im Sinne eines Einrückens zu betätigen. Zum Rückstellen, also zum Ausrücken der Kupplungen dienen Membranfedern 146; 148, von denen die dem Betätigungskolben 130 zugeordnete Membranfeder 148 in der Fliehkraft-Druckausgleichskammer 142 aufgenommen ist.

Die Druckkammern 118 und 140 sind, jedenfalls während normalen Betriebszuständen der Doppelkupplung 12, vollständig mit Druckmedium (hier Hydrauliköl) gefüllt, und der Betätigungszustand der Lamellen-Kupplungsanordnungen hängt an sich vom an den Druckkammern angelegten Druckmediumsdruck ab. Da sich aber die Außenlamellenträger 62 und 70 samt dem Ringteil 66 und dem Betätigungskolben 110 und 130 sowie dem Wandungsteil 132 im Fahrbetrieb mit der Kurbelwelle 14 mitdrehen, kommt es auch ohne Druckanlegung an den Druckkammern 118 und 140 von seiten der Drucksteuereinrichtung zu fliehkraftbedingten Druckerhöhungen in den Druckkammern, die zumindest bei größeren Drehzahlen zu einem ungewollten Einrücken oder zumindest Schleifen der Lamellen-Kupplungsanordnungen führen könnten. Aus diesem Grunde sind die schon erwähnten Fliehkraft-Druckausgleichskammern 120, 142 vorgesehen, die ein Druckausgleichsmedium aufnehmen und in denen es in entsprechender Weise zu fliehkraftbedingten Druckerhöhungen kommt, die die in den Druckkammern auftretenden fliehkraftbedingten Druckerhöhungen kompensieren.

Man könnte daran denken, die Fliehkraft-Druckausgleichskammern 120 und 142 permanent mit Druckausgleichsmedium, beispielsweise Öl, zu füllen, wobei man gegebenenfalls einen Volumenausgleich zur Aufnahme von im Zuge einer Betätigung der Betätigungskolben verdrängtem Druckausgleichsmedium vorsehen könnte. Bei der in Fig. 12 gezeigten Ausführungsform werden die Fliehkraft-Druckausgleichskammern 120, 142 jeweils erst im Betrieb des Antriebsstrangs mit Druckausgleichsmedium gefüllt, und zwar in Verbindung mit der Zufuhr von Kühlfluid, beim gezeigten Ausführungsbeispiel speziell Kühlöl, zu den Lamellen-Kupplungsanordnungen 64 und 72 über einen zwischen dem Ringteil 66 und der äußeren Getriebeeingangswelle 24 ausgebildeten Ringkanal 150, dem die für das Kühlöl durchlässigen Lager 90, 92 zuzurechnen sind. Das gegebenenfalls von der Pumpe 320 bereitgestellte Kühlöl fließt von einem getriebeseitigen Anschluss zwischen dem Ringteil und der Getriebeeingangswelle 24 in Richtung zur Antriebseinheit durch das Lager 90 und das Lager 92 hindurch und strömt dann in einem Teilstrom zwischen dem vom Getriebe fernen Endabschnitt des Ringteils 66 und dem Nabenteil 84 nach radial außen in Richtung zum Lamellenpaket 74 der zweiten Lamellen-Kupplungsanordnung 72, tritt aufgrund von Durchlassöffnungen im Innenlamellenträger 86 in den Bereich der Lamellen ein, strömt zwischen den Lamellen des Lamellenpakets 74 bzw. durch Reibbelagnuten o. dgl. dieser Lamellen nach radial außen, tritt durch Durchlassöffnungen im Außenlamellenträger 70 und Durchlassöffnungen im Innenlamellenträger 82 in den Bereich des Lamellenpakets 76 der ersten Lamellen-Kupplungsanordnung 64 ein, strömt zwischen den Lamellen dieses Lamellenpakets bzw durch Belagnuten o. dgl. dieser Lamellen nach radial außen und fließt dann schließlich durch Durchlassöffnungen im Außenlamellenträger 62 nach radial außen ab. An der Kühlölzufuhrströmung zwischen dem Ringteil 66 und der Getriebeeingangswelle 24 sind auch die Fliehkraft-Druckausgleichskammern 120, 142 angeschlossen, und zwar mittels Radialbohrungen 152, 154 im Ringteil 66. Da bei stehender Antriebseinheit das als Druckausgleichsmedium dienende Kühlöl in den Druckausgleichskammern 120, 142 mangels Fliehkräften aus den Druckausgleichskammern abläuft, werden die Druckausgleichskammern jeweils wieder neu während des Betriebs des Antriebsstrangs (des Kraftfahrzeugs) gefüllt.

Da eine der Druckkammer 140 zugeordnete Druckbeaufschlagungsfläche des Betätigungskolbens 130 kleiner ist und sich überdies weniger weit nach radial außen erstreckt als eine der Druckausgleichskammer 142 zugeordnete Druckbeaufschlagungsfläche des Kolbens 130, ist in dem Wandungsteil 132 wenigstens eine Füllstandsbegrenzungsöffnung 156 ausgebildet, die einen maximalen, die erforderliche Fliehkraftkompensation ergebenden Radialfüllstand der Druckausgleichskammer 142 einstellt. Ist der maximale Füllstand erreicht, so fließt das über die Bohrung 154 zugeführte Kühlöl durch die Füllstandsbegrenzungsöffnung 156 ab und vereinigt sich mit dem zwischen dem Ringteil 66 und dem Nabenteil 84 nach radial außen tretenden Kühlölstrom. Im Falle des Kolbens 110 sind die der Druckkammer 118 und die der Druckausgleichskammer 120 zugeordneten Druckbeaufschlagungsflächen des Kolbens gleich groß und erstrecken sich im gleichen Radialbereich, so dass für die Druckausgleichskammer 120 entsprechende Füllstandsbegrenzungsmittel nicht erforderlich sind.

Der Vollständigkeit halber soll noch erwähnt werden, dass im Betrieb vorzugsweise noch weitere Kühlölströmungen auftreten. So ist in der Getriebeeingangswelle 24 wenigstens eine Radialbohrung 160 vorgesehen, über die sowie über einen Ringkanal zwischen den beiden Getriebeeingangswellen ein weiterer Kühlölteilstrom fließt, der sich in zwei Teilströme aufspaltet, von denen einer zwischen den beiden Nabenteilen 80 und 84 (durch das Axiallager 94) nach radial außen fließt und der andere Teilstrom zwischen dem getriebefernen Endbereich der Getriebeeingangswelle 22 und dem Nabenteil 80 sowie zwischen diesem Nabenteil 80 und dem Ringabschnitt 38 der Kupplungsnabe 34 (durch die Lager 98 und 100) nach radial außen strömt.

Weitere Einzelheiten der Doppelkupplung 12 gemäß dem beschriebenen Ausführungsbeispiel sind für den Fachmann ohne weiteres aus Fig. 12 entnehmbar. So ist die Axialbohrung im Ringabschnitt 36 der Kupplungsnabe 34, in der die Innenverzahnung 46 für die Pumpenantriebswelle ausgebildet ist, durch einen darin festgelegten Stopfen 180 öldicht verschlossen. Das Trägerblech 60 ist am Außenlamellenträger 62 durch zwei Halteringe 172, 174 axial fixiert, von denen der Haltering 172 auch die Endlamelle 170 axial abstützt. Ein entsprechender Haltering ist auch für die Abstützung des Lamellenpakets 74 am Außenlamellenträger 70 vorgesehen.

Betreffend weitere Einzelheiten und vorteilhafte Ausgestaltungen der Doppelkupplung 12 wird auf die deutschen Patentanmeldungen 199 55 365.3 (AT 17.11. 1999); 100 04 179.5, 100 04 186.8, 100 04 184.1, 100 04 189.2, 100 04 190.6, 100 04 105.7 (alle AT 01.02.2000); 100 34 730.4 (AT 17.07.2000) verwiesen, deren Offenbarung in den Offenbarungsgehalt der vorliegenden Anmeldung einbezogen wird. Es wird hierzu darauf hingewiesen, dass Fig. 12 der vorliegenden Anmeldung der Fig. 1 dieser Anmeldungsserie entspricht.

Zusammenfassend betrifft die Erfindung ein Kupplungssystem, umfassend eine Kupplungseinrichtung insbesondere für die Anordnung in einem Antriebsstrang zwischen einer Antriebseinheit und einem Getriebe sowie umfassend eine Betätigungseinrichtung zur Betätigung der Kupplungseinrichtung auf hydraulischem Wege. Die Kupplungseinrichtung weist eine Mehrzahl jeweils einer Getriebeeingangswelle zugeordnete Kupplungsanordnungen auf, die über die Betätigungseinrichtung auf hydraulischem Wege unter Vermittlung wenigstens eines jeweiligen hydraulischen Nehmerzylinders der Kupplungseinrichtung betätigbar sind. Die Betätigungseinrichtung weist wenigstens eine Hydraulikmedium-Bereitstelleinrichtung zum Bereitstellen von Hydraulikmedium auf einem einstellbaren, über den wenigstens einen Nehmerzylinder den Betätigungszustand einer jeweiligen Kupplungsanordnung bestimmenden Druckniveau und eine Drucksensoranordnung zum Erfassen wenigstens'des einer der Kupplungsanordnungen zugeordneten Druckniveaus auf. Es werden unter anderem verschiedene Möglichkeiten vorgeschlagen, die eine Ausbildung der Drucksensoranordnung mit nur einem einzigen Drucksensor ermöglichen.

## Patentansprüche

1. Kupplungssystem, umfassend eine Kupplungseinrichtung (202) insbesondere für die Anordnung in einem Antriebsstrang zwischen einer Antriebseinheit und einem Getriebe sowie umfassend eine Betätigungseinrichtung (208, 304, 214, 216, ECU) zur Betätigung der Kupplungseinrichtung auf hydraulischem Wege,
wobei die Kupplungseinrichtung eine Mehrzahl jeweils einer Getriebeeingangswelle zugeordnete Kupplungsanordnungen (204, 206) aufweist, die über die Betätigungseinrichtung auf hydraulischem Wege unter Vermittlung wenigstens eines jeweiligen hydraulischen Nehmerzylinders der Kupplungseinrichtung betätigbar sind,
wobei die Betätigungseinrichtung wenigstens eine Hydraulikmedium-Bereitstelleinrichtung (208, 304, 214, 216) zum Bereitstellen von Hydraulikmedium auf einem einstellbaren, über den wenigstens einen Nehmerzylinder den Betätigungszustand einer jeweiligen Kupplungsanordnung (204 bzw. 206) bestimmenden Druckniveau und eine Drucksensoranordnung (322) zum Erfassen wenigstens des einer der Kupplungsanordnungen zugeordneten Druckniveaus aufweist,
wobei die Drucksensoranordnung (322) derart ausgebildet und angeordnet ist, dass sie nur ein zugeordnetes Druckniveau erfasst, das den Betätigungszustand genau einer zugeordneten Kupplungsanordnung bestimmt,
wobei die Betätigungseinrichtung (208, 304, 214, 216, ECU) dafür ausgelegt ist, diese eine Kupplungsanordnung in Abhängigkeit von einer einen Soll-Betätigungszustand dieser Kupplungsanordnung repräsentierenden Führungsgröße und einer einen Ist-Betätigungszustand dieser Kupplungsanordnung repräsentierenden, gegebenenfalls dem erfassten Druckniveau entsprechenden Ist-Größe zu betätigen und
wobei die Betätigungseinrichtung (208, 304, 214, 216, ECU) ferner dafür ausgelegt ist, wenigstens eine andere Kupplungsanordnung in Abhängigkeit von einer einen Soll-Betätigungszustand der anderen Kupplungsanordnung repräsentierenden Führungsgröße und wenigstens einer vorgegebenen oder vorgebbaren Beziehung zwischen der Führungsgröße und einer über den wenigstens einen Nehmerzylinder auf die Kupplungsanordnung wirkenden Ausgangsgröße der Betätigungseinrichtung zu betätigen.

2. Kupplungssystem nach Anspruch 1, **dadurch gekennzeichnet, dass** die Betätigungseinrichtung wenigstens einen Regelkreis (ECU, 216, 322) zur geregelten Betätigung der einen Kupplungsanordnung aufweist.

3. Kupplungssystem nach Anspruch 1 oder 2, **dadurch gekennzeichnet, dass** der einen Kupplungsanordnung wenigstens ein Anfahrgang des Getriebes zugeordnet ist.

4. Kupplungssystem nach einem der Ansprüche 1 bis 3, **dadurch gekennzeichnet, dass** die Betätigungseinrichtung wenigstens eine Steuerkette (ECU, 214) zur gesteuerten Betätigung der wenigstens einen anderen Kupplungsanordnung aufweist.

5. Kupplungssystem nach einem der Ansprüche 1 bis 4, **dadurch gekennzeichnet, dass** die Betätigungseinrichtung eine der Drucksensoranordnung (322) zugeordnete Umschaltventilanordnung (330) aufweist, die derart ausgelegt und angeordnet ist, dass unter Vermittlung der Drucksensoranordnung wahlweise für eine ausgewählte (204 oder 206) von mehreren Kupplungsanordnung das den Betätigungszustand dieser Kupplungsanordnung bestimmende Druckniveau erfassbar ist, und dass diese ausgewählte Kupplungsanordnung der Betätigungseinrichtung (208, 304, 214, 216, ECU) als die eine Kupplungsanordnung zuordenbar ist und wenigstens eine nicht-ausgewählte Kupplungsanordnung der Betätigungseinrichtung als andere Kupplungsanordnung zuordenbar ist.

6. Kupplungssystem, umfassend eine Kupplungseinrichtung (202) insbesondere für die Anordnung in einem Antriebsstrang zwischen einer Antriebseinheit und einem Getriebe sowie umfassend eine Betätigungseinrichtung (208, 304, 214, 216, ECU) zur Betätigung der Kupplungssystem auf hydraulischem Wege,
wobei die Kupplungseinrichtung ein Mehrzahl jeweils einer Getriebeeingangswelle zugeordnete Kupplungsanordnungen (204, 206) aufweist, die über die Betätigungseinrichtung auf hydraulischem Wege unter Vermittlung wenigstens eines jeweiligen hydraulischen Nehmerzylinders der Kupplungseinrichtung betätigbar sind,
wobei die Betätigungseinrichtung wenigstens eine Hydraulikmedium-Bereitstelleinrichtung (208, 304, 214, 216) zum Bereitstellen von Hydraulikmedium auf einem einstellbaren, über den wenigstens einen Nehmerzylinder den Betätigungszustand einer jeweiligen Kupplungsanordnung bestimmenden Druckniveau und eine Drucksensoranordnung (322) zum Erfassen wenigstens des einer der Kupplungsanordnungen zugeordneten Druckniveaus aufweist,
wobei der Drucksensoranordnung (322) eine vorzugsweise als Umschaltventilanordnung (330) ausgebildete Auswahlanordnung (330; 350) zugeordnet ist, über die die Drucksensoranordnung (322) wahlweise oder/und betriebssituationsabhängig mit einem jeweiligen Hydrauliksystemabschnitt einer ausgewählten (204 oder 206) Kupplungsanordnung aus der Mehrzahl von Kupplungsanordnungen (204, 206) in Druckerfassungsverbindung bringbar ist, um das den Betätigungszustand dieser ausgewählten Kupplungsanordnung bestimmende Druckniveau zu erfassen.

7. Kupplungssystem nach Anspruch 6, **dadurch gekennzeichnet, dass** die Betätigungseinrichtung dafür ausgelegt ist, wenigstens eine mittels der Auswahlanordnung (330; 350) ausgewählte oder auswählbare Kupplungsanordnung in Abhängigkeit von einer einen Soll-Betätigungszustand dieser Kupplungsanordnung repräsentierenden Führungsgröße und einer einen Ist-Betätigungszustand dieser Kupplungsanordnung repräsentierenden, gegebenenfalls einem erfassten Druckniveau entsprechenden Ist-Größe zu betätigen.

8. Kupplungssystem nach Anspruch 7, **dadurch gekennzeichnet, dass** die Betätigungseinrichtung wenigstens einen Regelkreis (ECU, 214 bzw. 216, 322) zur geregelten Betätigung der betreffenden Kupplungsanordnung aufweist.

9. Kupplungssystem nach einem der Ansprüche 6 bis 8, **dadurch gekennzeichnet, dass** die Betätigungsseinrichtung dafür ausgelegt ist, wenigstens eine mittels der Auswahlanordnung (330; 350) momentan nicht ausgewählte oder nicht auswählbare Kupplungsanordnung in Abhängigkeit von einer einen Soll-Betätigungszustand dieser Kupplungsanordnung repräsentierenden Führungsgröße und wenigstens einer vorgegebenen oder vorgebbaren Beziehung zwischen der Führungsgröße und einer über den wenigstens einen Nehmerzylinder auf die Kupplungsanordnung wirkenden Ausgangsgröße der Betätigungseinrichtung zu betätigen.'

10. Kupplungssystem nach Anspruch 9, **dadurch gekennzeichnet, dass** die Betätigungseinrichtung wenigstens eine Steuerkette (ECU, 214 bzw. 216) zur gesteuerten Betätigung der betreffenden Kupplungsanordnung (204 bzw. 206) aufweist.

11. Kupplungssystem nach Anspruch 9 oder 10, **dadurch gekennzeichnet, dass** die Beziehung zwischen der Führungsgröße und der über den wenigstens einen Nehmerzylinder auf die Kupplungsanordnung wirkenden Ausgangsgröße der Betätigungseinrichtung auf Grundlage eines vermittels der Drucksensoranordnung und der Auswahlanordnung erfassten Ist-Druckwerts kalibrierbar ist.

12. Kupplungssystem, umfassend eine Kupplungseinrichtung (202) insbesondere für die Anordnung in einem Antriebsstrang zwischen einer Antriebseinheit und einem Getriebe sowie umfassend eine Betätigungseinrichtung (208, 304, 214, 216, ECU) zur Betätigung der Kupplungseinrichtung auf hydraulischem Wege,
wobei die Kupplungseinrichtung wenigstens zwei jeweils einer Getriebeeingangswelle zugeordnete Kupplungsanordnungen (204, 206) aufweist, die über die Betätigungseinrichtung auf hydraulischem Wege unter Vermittlung wenigstens eines jeweiligen hydraulischen Nehmerzylinders der Kupplungseinrichtung betätigbar sind,
wobei die Betätigungseinrichtung wenigstens eine Hydraulikmedium-Bereitstelleinrichtung (208, 304, 214, 216) zum Bereitstellen von Hydraulikmedium auf einem einstellbaren, über den wenigstens einen Nehmerzylinder den Betätigungszustand einer jeweiligen Kupplungsanordnung bestimmenden Druckniveau und eine Drucksensoranordnung (322) zum Erfassen wenigstens des einer der Kupplungsanordnungen zugeordneten Druckniveaus aufweist,
wobei zwischen die Drucksensoranordnung (322) einerseits und einem einer ersten Kupplungsanordnung (204) zugeordneten ersten Hydrauliksystemabschnitt und einem einer zweiten Kupplungsanordnung (206) zugeordneten zweiten Hydrauliksystemabschnitt andererseits eine Auswahlanordnung (350) geschaltet ist, die in Abhängigkeit von einem Differenzdruck, der einem den Betätigungszustand der ersten Kupplungsanordnung (204) bestimmenden ersten Druckniveau und einem den Betätigungszustand der zweiten Kupplungsanordnung (206) bestimmenden zweiten Druckniveau zugeordnet ist, eine der beiden Kupplungsanordnung für die Erfassung des den Betätigungszustand dieser Kupplungsanordnung - bestimmenden Druckniveaus auswählt und der Drucksensoranordnung (322) derart zuordnet, dass mittels der Drucksensoranordnung (322) ein dieses Druckniveau repräsentierender Druck erfassbar ist.

13. Kupplungssystem nach Anspruch 12, **dadurch gekennzeichnet, dass** die Auswahlanordnung (350) diejenige von den beiden Kupplungsanordnungen auswählt, die unter Vermittlung des jeweiligen Druckniveaus weiter eingerückt ist.

14. Kupplungssystem nach Anspruch 12, **dadurch gekennzeichnet, dass** die Auswahlanordnung diejenige von den beiden Kupplungsanordnungen auswählt, die unter Vermittlung des jeweiligen Druckniveaus weiter ausgerückt ist.

15. Kupplungssystem nach einem der Ansprüche 12 bis 14, **dadurch gekennzeichnet, dass** die Betätigungseinrichtung (208, 304, 214, 216, ECU) dafür ausgelegt ist, die durch die Auswahlanordnung (350) ausgewählte Kupplungsanordnung in Abhängigkeit von einer einen Soll-Betätigungszustand dieser Kupplungsanordnung repräsentierenden Führungsgröße und einer einen Ist-Betätigungszustand dieser Kupplungsanordnung repräsentierenden, gegebenenfalls einem erfassten Druckniveau entsprechenden Ist-Größe zu betätigen.

16. Kupplungssystem nach Anspruch 15, **dadurch gekennzeichnet, dass** die Betätigungseinrichtung wenigstens einen Regelkreis (ECU, 214 bzw. 216, 322) zur geregelten Betätigung der ausgewählten Kupplungsanordnung aufweist.

17. Kupplungssystem nach einem der Ansprüche 12 bis 16, **dadurch gekennzeichnet, dass** die Betätigungsseinrichtung (208, 304, 214, 216, ECU) dafür ausgelegt ist, die durch die Auswahlanordnung (350) momentan nicht ausgewählte Kupplungsanordnung in Abhängigkeit von einer einen Soll-Betätigungszustand dieser Kupplungsanordnung repräsentierenden Führungsgröße und wenigstens einer vorgegebenen oder vorgebbaren Beziehung zwischen der Führungsgröße und einer über den wenigstens einen Nehmerzylinder auf die Kupplungsanordnung wirkenden Ausgangsgröße der Betätigungseinrichtung zu betätigen.

18. Kupplungssystem nach Anspruch 17, **dadurch gekennzeichnet, dass** die Betätigungseinrichtung wenigstens eine Steuerkette (ECU, 214 bzw. 216) zur gesteuerten Betätigung der nicht-ausgewählten Kupplungsanordnung (204 bzw. 206) aufweist.

19. Kupplungssystem nach Anspruch 17 oder 18, **dadurch gekennzeichnet, dass** die Beziehung zwischen der Führungsgröße und der über den wenigstens einen Nehmerzylinder auf die Kupplungsanordnung wirkenden Ausgangsgröße der Betätigungseinrichtung auf Grundlage eines vermittels der Drucksensoranordnung (322) und der Auswahlanordnung (350) erfassten Ist-Druckwerts kalibrierbar ist.

20. Kupplungssystem nach einem der Ansprüche 12 bis 19, **dadurch gekennzeichnet, dass** die Auswahlanordnung (350) eine unter Vermittlung des Differenzdruck zumindest zwischen einer Öffnungsstellung und einer Schließstellung oder zumindest zwischen einem ersten Weg und einem zweiten Weg umschaltbare Ventilanordnung (362) umfasst.

21. Kupplungssystem nach einem der Ansprüche 12 bis 20, **dadurch gekennzeichnet, dass** die Auswahlanordnung eine Trennelementanordnung (358, 360; 359) mit wenigstens einem in einer Hydraulikverbindung zwischen dem ersten und zweiten Hydrauliksystemabschnitt angeordneten und unter der Wirkung des Differenzdrucks längs einer zugeordneten, einen Abschnitt der Hydraulikverbindung bildenden Verschiebestrecke (352, 354; 353) verschiebbaren Trennelement (358, 360, 359) umfasst, das den ersten und den zweiten Hydrauliksystemabschnitt voneinander trennt.

22. Kupplungssystem nach Anspruch 21, **dadurch gekennzeichnet, dass** die Drucksensoranordnung (322) an einem mittleren Abschnitt der Verschiebestrecke (353) angeschlossen ist.

23. Kupplungssystem nach Anspruch 21, **dadurch gekennzeichnet, dass** eine einen ersten Abschnitt der Hydraulikverbindung bildende erste Verschiebestrecke (352) mit wenigstens einem unter der Wirkung des Differenzdrucks entlang derselben verschiebbaren ersten Trennelement und eine einen zweiten Abschnitt der Hydraulikverbindung bildende zweite Verschiebestrecke (354) mit wenigstens einem unter der Wirkung des Differenzdrucks entlang derselben verschiebbaren zweiten Trennelement (360) in Reihe geschaltet sind und dass die Drucksensoranordnung (322) zwischen der ersten (352) und der zweiten (354) Verschiebestrecke an die Hydraulikverbindung angeschlossen ist.

24. Kupplungssystem nach einem der Ansprüche 21 bis 23, **dadurch gekennzeichnet, dass** dem Trennelement (358 bzw. 360 bzw. 359) an einem dem ersten Hydrauliksystemabschnitt näheren ersten Ende der betreffenden Verschiebestrecke (352 bzw. 354; 353) ein erster, gegebenenfalls mit dem Trennelement (358 bzw. 360; 359) in Dichteingriff bringbarer Anschlag (372' bzw. 370'; 373) oder/und an einem dem zweiten Hydrauliksystemabschnitt näheren zweiten Ende der betreffenden Verschiebestrecke (354 bzw. 352; 353) ein zweiter, gegebenenfalls mit dem Trennelement (360 bzw. 358; 359) in Dichteingriff bringbarer Anschlag (372 bzw. 370; 373) zugeordnet ist.

25. Kupplungssystem nach einem der Ansprüche 21 bis 24, **dadurch gekennzeichnet, dass** das Trennelement als Kolbenelement (358 bzw. 360; 359) oder Kugelelement ausgeführt ist.

26. Kupplungssystem nach Anspruch 25, **dadurch gekennzeichnet, dass** das Kolbenelement (358 bzw. 360) mit einer darin integrierten Ventilanordnung (362) ausgeführt ist, die unter Vermittlung des Differenzdruck zumindest zwischen einer Öffnungsstellung und einer Schließstellung umschaltbar ist.

27. Kupplungssystem nach einem der Ansprüche 20 bis 26, **dadurch gekennzeichnet, dass** die Ventilanordnung wenigstens ein Rückschlagventil (362) umfasst.

28. Kupplungssystem nach einem der Ansprüche 21 bis 27, **dadurch gekennzeichnet, dass** dem Trennelement eine Vorspannfederanordnung zugeordnet ist, die das Trennelement in eine vorgegebene Richtung entlang der Verschiebestrecke vorspannt.

29. Kupplungssystem nach einem der Ansprüche 21 bis 27, **dadurch gekennzeichnet, dass** das Trennelement (358 bwz. 360; 359) hinsichtlich seiner Positionierung entlang der Verschiebestrecke im Wesentlichen alleine unter der Wirkung von Hydraulikdrücken und gegebenenfalls Reibkräften steht.

30. Kupplungssystem nach einem der Ansprüche 21 bis 29, **dadurch gekennzeichnet, dass** die Verschiebestrecke (352, 354; 353) als Druckausgleichsstrecke dient, die ermöglicht, dass durch Verschieben des Trennelements der von der Drucksensoranordnung erfasste Druck einer Änderung eines zu erfassenden Druckniveaus nachgeführt wird.

31. Kupplungssystem nach einem der Ansprüche 1 bis 30, **dadurch gekennzeichnet, dass** ein einziger Drucksensor (322) die Drucksensoranordnung bildet.

32. Kupplungssystem nach einem der vorhergehenden Ansprüche, **dadurch gekennzeichnet, dass** die Hydraulikmedium-Bereitstelleinrichtung (208, 304, 214, 216) eine Druckmediumversorgung (208, 304) und eine dieser nachgeschaltete Druckeinstellanordnung (214, 216) aufweist, wobei die Druckeinstellanordung auf Grundlage von von der Druckmediumversorgung bereitgestelltem, auf einem Versorgungsdruckniveau befindlichen Hydraulikmedium das Hydraulikmedium auf dem einstellbaren, über den wenigstens einen Nehmerzylinder den Betätigungszustand der jeweiligen Kupplungsanordnung (204 bzw. 206) bestimmenden Druckniveau bereitstellt.

33. Kupplungssystem nach Anspruch 32, **dadurch gekennzeichnet, dass** die Druckmediumversorgung eine Hydraulik-Pumpenanordnung (208) und gegebenenfalls eine Hydraulikmedium-Speicheranordnung (304) zum Speichern unter Druck stehenden Hydraulikmediums aufweist.

34. Kupplungssystem nach Anspruch 32 oder 33, **dadurch gekennzeichnet, dass** eine der Druckmediumversorgung (208, 304) zugeordnete Drucksensoranordnung (310) vorgesehen ist, die das Versorgungsdruckniveau erfasst.

35. Kupplungssystem nach Anspruch 33 und 34, **dadurch gekennzeichnet, dass** die Drucksensoranordnung (310) einen Speicherdruck der Hydraulikmedium-Speicheranordnung (304) oder/und einen Abgabedruck der Hydraulik-Pumpenanordnung (208) erfasst.

36. Kupplungssystem nach Anspruch 32 oder 33, **dadurch gekennzeichnet, dass** eine Druckermittlungseinrichtung vorgesehen ist, die das Versorgungsdruckniveau indirekt auf Grundlage wenigstens einer der Hydraulik-Pumpenanordnung, insbesondere wenigstens eines Elektromotors derselben, zugeordneten, einen Förder- oder Druckversorgungszustand der Pumpenanordnung kennzeichnenden Kenngröße ermittelt.

37. Kupplungssystem nach Anspruch 36, **dadurch gekennzeichnet, dass** eine der Ermittlung des Versorgungsdruckniveaus zugrundeliegende Beziehung zwischen dem Versorgungsdruckniveau und der wenigstens einen Kenngröße, gegebenenfalls eine entsprechende Kennlinie oder ein entsprechendes Kennfeld, auf Grundlage eines vermittels der Drucksensoranordnung erfassten Ist-Druckwerts kalibrierbar ist.

38. Kupplungssystem, umfassend eine Kupplungseinrichtung (202) insbesondere für die Anordnung in einem Antriebsstrang zwischen einer Antriebseinheit und einem Getriebe sowie umfassend eine Betätigungseinrichtung (208, 304, 214, 216, ECU) zur Betätigung der Kupplungseinrichtung auf hydraulischem Wege,
wobei die Kupplungseinrichtung wenigstens eine, vorzugsweise eine Mehrzahl jeweils einer Getriebeeingangswelle zugeordnete Kupplungsanordnungen (204, 206) aufweist, die über die Betätigungseinrichtung auf hydraulischem Wege unter Vermittlung wenigstens eines jeweiligen hydraulischen Nehmerzylinders der Kupplungseinrichtung betätigbar sind,
wobei die Betätigungseinrichtung wenigstens eine Hydraulikmedium-Bereitstelleinrichtung (208, 304, 214, 216) zum Bereitstellen von Hydraulikmedium auf einem einstellbaren, über den wenigstens einen Nehmerzylinder den Betätigungszustand einer jeweiligen Kupplungsanordnung bestimmenden Druckniveau und eine Drucksensoranordnung (322) zum Erfassen des der Kupplungsanordnung bzw. wenigstens des einer der Kupplungsanordnungen zugeordneten Druckniveaus aufweist,
wobei die Hydraulikmedium-Bereitstelleinrichtung (208, 304, 214, 216) eine Druckmediumversorgung (208, 304) und eine dieser nachgeschaltete Druckeinstellanordnung (214, 216) aufweist, wobei die Druckeinstellanordung auf Grundlage von von der Druckmediumversorgung bereitgestelltem, auf einem Versorgungsdruckniveau befindlichen Hydraulikmedium das Hydraulikmedium auf dem einstellbaren,
über den wenigstens einen Nehmerzylinder den Betätigungszustand der jeweiligen Kupplungsanordnung (204 bzw. 206) bestimmenden Druckniveau bereitstellt,
wobei eine Druckermittlungseinrichtung vorgesehen ist, die das Versorgungsdruckniveau indirekt auf Grundlage wenigstens einer der Hydraulik-Pumpenanordnung, insbesondere wenigstens eines Elektromotors derselben, zugeordneten, einen Förder- oder Druckversorgungszustand der Pumpenanordnung kennzeichnenden Kenngröße ermittelt und
wobei eine der Ermittlung des Versorgungsdruckniveaus zugrundeliegende Beziehung zwischen dem Versorgungsdruckniveau und der wenigstens einen Kenngröße, gegebenenfalls eine entsprechende Kennlinie oder ein entsprechendes Kennfeld, auf Grundlage eines vermittels der Drucksensoranordnung erfassten Ist-Druckwerts kalibrierbar ist.

39. Kupplungssystem nach Anspruch 37 oder 38, **dadurch gekennzeichnet, dass** die Ermittlung des Versorgungsdruckniveaus auf Grundlage eines von dem Elektromotor momentan aufgenommenen elektrischen Stroms oder/und einer momentanen Drehzahl des Elektromotors bzw. einer zugeordneten Hydraulikpumpe der Hydraulik-Pumpenanordnung erfolgt.

40. Kupplungssystem nach einem der Ansprüche 37 bis 39, **dadurch gekennzeichnet, dass** die Druckeinstellanordnung in Zuordnung zu der Kupplungsanordnung bzw. den Kupplungsanordnungen eine (jeweilige) Ventilanordnung umfasst, die das Versorgungsdruckniveau in das den Betätigungszustand bestimmende Druckniveau umsetzt, wobei die Ventilanordnung in Zuordnung zu der bzw. einer jeweiligen Kupplungsanordnung vorzugsweise wenigstens ein Proportional-Druckregelventil oder/und wenigstens zwei An/Aus-Ventile umfasst, wobei zum Kalibrieren der Beziehung die Ventilanordnung in einen Zustand bringbar ist, dass der von der von der Drucksensoranordnung erfasste Ist-Druckwert in definierter Weise vom Versorgungsdruckniveau abhängt.

41. Kupplungssystem nach Anspruch 40, **dadurch gekennzeichnet, dass** der Ist-Druckwert unmittelbar dem momentanen Versorgungsdruckniveau entspricht.

42. Kupplungssystem nach Anspruch 40 oder 41, **dadurch gekennzeichnet, dass** die Ventilanordnung in einen Durchlass-Zustand schaltbar ist, in dem das Versorgungsdruckniveau, gegebenfalls über die Auswahlanordnung, zur Drucksensoranordnung durchgelassen wird.

43. Kupplungssystem nach einem der Ansprüche 32 bis 42, **dadurch gekennzeichnet, dass** über eine/die vorzugsweise als Umschaltventilanordnung ausgebildete Auswahlanordnung (330; 350) wenigstens ein Drucksensor der Drucksensoranordnung (322) wahlweise oder/und betriebssituationsabhängig mit einem Hydrauliksystemabschnitt, in dem das Versorgungsdruckniveau herrscht, und einem Hydrauliksystemabschnitt, in dem ein den Betätigungszustand einer zugeordneten, gegebenenfalls momentan mittels der Auswahlanordnung ausgewählten Kupplungsanordnung bestimmendes Druckniveau herrscht, in Druckerfassungsverbindung bringbar ist.

44. Kupplungssystem nach wenigstens einem der vorhergehenden Ansprüche, jedenfalls nach Anspruch 11 oder nach Anspruch 37 oder 38, **dadurch gekennzeichnet, dass** eine dem Kupplungssystem zugeordnete Steuereinheit (ECU) die Kalibrierung im Betrieb periodisch oder/und unter Ausnutzung von im Betrieb auftretenden oder im Betrieb ohne Störung desselben einstellbaren Zuständen der Kupplungsanordnung bzw. Kupplungsanordnungen und gegebenfalls des Getriebes durchführt.
